# EUROPEAN PATENT APPLICATION

(11) **EP 4 827 214 A1**
(43) Date of publication of application: **21.10.2026**
(21) Application number: 25738323.2
(22) Date of filing: 03.01.2025
(51) Int. Cl.: H04W 72/231

(54) **METHOD AND APPARATUS USED IN COMMUNICATION NODE FOR WIRELESS COMMUNICATION**

(30) Priority: 09.01.2024 CN 202410033707
(71) Applicant: Honor Device Co., Ltd., Shenzhen, Guangdong 518040 (CN)
(72) Inventor: YU, Qiaoling, Shenzhen, Guangdong 518040 (CN); REN, Nannan, Shenzhen, Guangdong 518040 (CN); ZHANG, Xiaobo, Shenzhen, Guangdong 518040 (CN)
(74) Representative: Gill Jennings & Every LLP
(86) International application number: PCT/CN2025/070381
(87) International publication number: WO 2025/148792

(57) **Abstract**

This application discloses a method and an apparatus in a communication node used for wireless communication. A communication node receives a first RRC message, where the first RRC message includes a first condition and first configuration information for a first candidate cell, the first configuration information includes physical layer configuration of the first candidate cell, and the first candidate cell is configured for a first serving cell; receives first signaling, where the first signaling indicates the first candidate cell, and the first signaling indicates a first timing advance command; and after the first signaling is received, in response to the first condition being satisfied, applies the first configuration information and sends target signaling. The solution proposed in this application is beneficial for enhancing early uplink synchronization of conditional LTM, beneficial for TA obtaining for the early uplink synchronization of the conditional LTM, and beneficial for improving robustness of a handover process.

## Description

This application claims priority to Chinese Patent Application No. 202410033707.6, filed with the China National Intellectual Property Administration on January 9, 2024 and entitled "METHOD AND APPARATUS IN COMMUNICATION NODE USED FOR WIRELESS COMMUNICATION", which is incorporated herein by reference in its entirety.

### TECHNICAL FIELD

This application relates to a transmission method and apparatus in a wireless communication system, and in particular, to a method and apparatus for early uplink synchronization.

### BACKGROUND

With continuous development of wireless communication, requirements for mobility, a transmission delay, and a system capacity become increasingly high. 3GPP completed standardization of L1 (Layer 1, layer 1)/L2 (Layer 2, layer 2) triggered mobility (L1/L2 Triggered Mobility, LTM) through the "Further NR (New Radio, new radio) Mobility Enhancements (Further NR mobility enhancements)" work item (Work Item, WI); and to further enhance mobility, conditional LTM or inter-CU LTM becomes important research content in 3GPP Release 19.

In addition, in future evolution, 3GPP further enhances some key technologies, for example, applying AI (Artificial Intelligence, artificial intelligence) or ML (Machine Learning, machine learning), to mobility, for improving mobility performance; and further researches network energy saving (Network Energy Saving, NES), for reducing environmental impact.

To enhance an LTM process, LTM supports early uplink synchronization. A serving cell triggers random access on an LTM candidate cell via a PDCCH order. After a UE sends a preamble on the LTM candidate cell, an RAR is not received. The serving cell sends TA of the candidate cell to the UE via an LTM Cell Switch Command MAC CE. Given that early uplink synchronization can greatly reduce a handover delay, applying the early uplink synchronization to conditional LTM, inter-CU LTM, a CHO, or a CPC has a good standardization prospect.

### SUMMARY

The inventors have found through research that the existing early uplink synchronization depends on the LTM Cell Switch Command MAC CE, making it difficult to apply to conditional LTM. For example, in the conditional LTM, if a network configures an LTM candidate cell and a corresponding handover condition, and a UE triggers LTM based on measurement, the UE cannot obtain TA of the LTM candidate cell via the LTM Cell Switch Command MAC CE. Therefore, it is necessary to enhance early uplink synchronization for the conditional LTM.

In view of the foregoing problem, this application provides a solution. In response to the foregoing problem descriptions, an NR system is used as an example. This application is also applicable to scenarios such as an LTE (Long-Term Evolution, long term evolution) system or an LTE-A (Long-Term Evolution Advanced, long term evolution advanced) system or a future 6G system, to achieve similar technical effects to the NR system. Moreover, although this application provides specific implementations for a 3GPP system, this application can also be used in a non-3GPP system scenario, to achieve similar technical effects to the 3GPP system. Further, a unified design scheme for different scenarios also helps reduce hardware complexity and costs. Further, although an original intention of this application is for a Uu air interface, this application can also be used for a PC5 interface, to achieve similar technical effects to the Uu air interface. Further, although the original intention of this application is for conditional LTM, this application can also be used for a CHO or a CPC, to achieve similar technical effects to the conditional LTM. Furthermore, although the original intention of this application is for a terminal-to-base station scenario, this application is also applicable to a V2X (Vehicle-to-Everything, vehicle-to-everything) scenario, and communication scenarios between a terminal and a relay and between a relay and a base station, to achieve similar technical effects to the terminal-to-base station scenario. Further, although the original intention of this application is for the terminal-to-base station scenario, this application is also applicable to an IAB (Integrated Access and Backhaul, integrated access and backhaul) communication scenario, to achieve similar technical effects to the terminal-to-base station scenario. Further, although the original intention of this application is for a terrestrial network (Terrestrial Network, TN) scenario, this application is also applicable to a non-terrestrial network (Non-Terrestrial Network, NTN) communication scenario, to achieve similar technical effects to the TN scenario. In addition, using a unified solution for different scenarios also helps reduce hardware complexity and costs.

In an embodiment, interpretation of terminology (Terminology) in this application refers to the definitions in the 3GPP specification protocol TS36 series.

In an embodiment, the interpretation of the terminology in this application refers to the definitions in the 3GPP specification protocol TS38 series.

In an embodiment, the interpretation of the terminology in this application refers to the definitions in the 3GPP specification protocol TS37 series.

It should be noted that, in a case of no conflict, embodiments of any node and features in the embodiments of this application can be applied to any other node. In a case of no conflict, embodiments and features in the embodiments of this application may be arbitrarily combined with each other.

This application discloses a method in a first node used for wireless communication, including:
receiving a first RRC message, where the first RRC message includes a first condition and first configuration information for a first candidate cell, the first configuration information includes physical layer configuration of the first candidate cell, and the first candidate cell is configured for a first serving cell; receiving first signaling, where the first signaling indicates the first candidate cell, and the first signaling indicates a first timing advance command; and after the first signaling is received, in response to the first condition being satisfied, applying the first configuration information and sending target signaling.

The first signaling is signaling of a protocol layer below an RRC sublayer; when the first signaling is received, no random access process is ongoing; an uplink timing of the target signaling depends on the first timing advance command; and the first condition depends on measurement.

In an embodiment, a problem to be resolved by this application includes: how to obtain early uplink synchronization of conditional mobility, where the conditional mobility includes conditional LTM or a CHO or a CPC.

In an embodiment, a problem to be resolved by this application includes: how to obtain early uplink synchronization of conditional LTM.

In an embodiment, a problem to be resolved by this application includes: how to enhance an LTM early uplink synchronization process, so as to be compatible with the conditional LTM.

In an embodiment, a problem to be resolved by this application includes: how to design a reasonable fallback mechanism to enhance robustness of a conditional LTM early uplink synchronization process.

In an embodiment, a characteristic of the foregoing method includes: The first signaling indicates the first candidate cell, and the first signaling indicates the first timing advance command.

In an embodiment, a characteristic of the foregoing method includes: In response to the first condition being satisfied, the first configuration information is applied and the target signaling is sent.

In an embodiment, a benefit of the foregoing method includes: The signaling process is beneficial for TA obtaining for early uplink synchronization of the conditional LTM.

In an embodiment, a benefit of the foregoing method includes: This is beneficial for shortening a handover delay of the conditional LTM.

In an embodiment, a benefit of the foregoing method includes: This is beneficial for improving robustness of the handover process.

According to one aspect of this application, it is characterized by including:
before the first signaling is received, sending a first preamble on the first candidate cell; and in response to sending the first preamble on the first candidate cell, determining that a random access process corresponding to the first preamble is successfully completed.

The first RRC message includes random access configuration information for the first candidate cell, and the random access configuration information includes at least one of an uplink carrier, an SSB, or a PRACH mask that is associated with the first preamble.

In an embodiment, a benefit of the foregoing method includes: This is beneficial for a fast handover of a UE.

In an embodiment, a benefit of the foregoing method includes: This is beneficial for reducing signaling overheads.

According to one aspect of this application, it is characterized by including:
receiving first DCI, where the DCI indicates an index of the first preamble.

The first DCI triggers the first Preamble.

In an embodiment, a benefit of the foregoing method includes: This is beneficial for the UE to determine a preamble resource for early uplink synchronization.

According to one aspect of this application, the first signaling includes a first bitmap, a first bit in the first bitmap indicates the first candidate cell, and the first bit being set to 1 indicates that the first signaling includes the first timing advance command.

In an embodiment, a problem to be resolved by this application includes: how to reasonably design a signaling structure, so that the signaling structure can carry TA of a plurality of candidate cells of the conditional LTM.

In an embodiment, a benefit of the foregoing method includes: This is beneficial for transmitting TA obtained during early uplink synchronization for the plurality of candidate cells.

In an embodiment, a benefit of the foregoing method includes: This is beneficial for reducing signaling overheads.

According to one aspect of this application, it is characterized by including:
starting or restarting a first timer in response to the first signaling being received.

The first timer is used for uplink time alignment of the first candidate cell.

In an embodiment, a benefit of the foregoing method includes: This is beneficial for determining validity of TA for early uplink synchronization.

In an embodiment, a benefit of the foregoing method includes: This is beneficial for a conditional handover decision of the UE.

According to one aspect of this application, the first signaling includes first time information, and a value of the first timer depends on the first time information.

In an embodiment, a benefit of the foregoing method includes: This is beneficial for determining validity of TA for early uplink synchronization.

In an embodiment, a benefit of the foregoing method includes: This is beneficial for determining a length of the first timer.

According to one aspect of this application, it is characterized by including:
storing the first timing advance command in response to the first signaling being received.

In an embodiment, a benefit of the foregoing method includes: This is beneficial for uplink alignment of the first candidate cell.

This application discloses a method in a second node used for wireless communication, including:
sending a first RRC message, where the first RRC message includes a first condition and first configuration information for a first candidate cell, the first configuration information includes physical layer configuration of the first candidate cell, and the first candidate cell is configured for a first serving cell; and sending first signaling, where the first signaling indicates the first candidate cell, and the first signaling indicates a first timing advance command.

After the first signaling is received, in response to the first condition being satisfied, a recipient of the first signaling applies the first configuration information and sends target signaling; an uplink timing of the target signaling depends on the first timing advance command; the first signaling is signaling of a protocol layer below an RRC sublayer; when the first signaling is received, no random access process is ongoing; and the first condition depends on measurement.

According to one aspect of this application, it is characterized by including:
sending first DCI, where the DCI indicates an index of a first preamble.

The first DCI triggers the first preamble.

According to one aspect of this application, the first signaling includes a first bitmap, a first bit in the first bitmap indicates the first candidate cell, and the first bit being set to 1 indicates that the first signaling includes the first timing advance command.

According to one aspect of this application, it is characterized by including:

The recipient of the first signaling starts or restarts a first timer in response to the first signaling being received.

The first timer is used for uplink time alignment of the first candidate cell.

According to one aspect of this application, the first signaling includes first time information, and a value of the first timer depends on the first time information.

According to one aspect of this application, it is characterized by including:

The recipient of the first signaling stores the first timing advance command in response to the first signaling being received.

This application discloses a method in a third node used for wireless communication, including:
receiving a first preamble on a first candidate cell; in response to receiving the first preamble, sending a second message to a second node, where the second message triggers first signaling, the first signaling indicates the first candidate cell, and the first signaling indicates a first timing advance command; and receiving target signaling.

The first RRC message includes a first condition and first configuration information for the first candidate cell, the first configuration information includes physical layer configuration of the first candidate cell, and the first candidate cell is configured for a first serving cell; the first RRC message includes random access configuration information for the first candidate cell, and the random access configuration information includes at least one of an uplink carrier, an SSB, or a PRACH mask that is associated with the first preamble; the first signaling is signaling of a protocol layer below an RRC sublayer; when the first signaling is received, no random access process is ongoing; an uplink timing of the target signaling depends on the first timing advance command; after the first signaling is received, in response to the first condition being satisfied, a recipient of the first signaling applies the first configuration information and sends the target signaling; the recipient of the first signaling is a recipient of the first RRC message; and the uplink timing of the target signaling depends on the first timing advance command.

This application discloses a first node used for wireless communication, including:
a first receiver, configured to: receive a first RRC message, where the first RRC message includes a first condition and first configuration information for a first candidate cell, the first configuration information includes physical layer configuration of the first candidate cell, and the first candidate cell is configured for a first serving cell; and receive first signaling, where the first signaling indicates the first candidate cell, and the first signaling indicates a first timing advance command; and
the first processing machine, configured to: after the first signaling is received, apply the first configuration information and send target signaling in response to the first condition being satisfied.

The first signaling is signaling of a protocol layer below an RRC sublayer; when the first signaling is received, no random access process is ongoing; an uplink timing of the target signaling depends on the first timing advance command; and the first condition depends on measurement.

This application discloses a second node used for wireless communication, including:
a second processing machine, configured to: send a first RRC message, where the first RRC message includes a first condition and first configuration information for a first candidate cell, the first configuration information includes physical layer configuration of the first candidate cell, and the first candidate cell is configured for a first serving cell; and send first signaling, where the first signaling indicates the first candidate cell, and the first signaling indicates a first timing advance command.

After the first signaling is received, in response to the first condition being satisfied, a recipient of the first signaling applies the first configuration information and sends target signaling; an uplink timing of the target signaling depends on the first timing advance command; the first signaling is signaling of a protocol layer below an RRC sublayer; when the first signaling is received, no random access process is ongoing; and the first condition depends on measurement.

This application discloses a third node used for wireless communication, including:
a third processing machine, configured to: receive a first preamble on a first candidate cell; in response to receiving the first preamble, send a second message to a second node, where the second message triggers first signaling, the first signaling indicates the first candidate cell, and the first signaling indicates a first timing advance command; and receive target signaling.

The first RRC message includes a first condition and first configuration information for the first candidate cell, the first configuration information includes physical layer configuration of the first candidate cell, and the first candidate cell is configured for a first serving cell; the first RRC message includes random access configuration information for the first candidate cell, and the random access configuration information includes at least one of an uplink carrier, an SSB, or a PRACH mask that is associated with the first preamble; the first signaling is signaling of a protocol layer below an RRC sublayer; when the first signaling is received, no random access process is ongoing; an uplink timing of the target signaling depends on the first timing advance command; after the first signaling is received, in response to the first condition being satisfied, a recipient of the first signaling applies the first configuration information and sends the target signaling; the recipient of the first signaling is a recipient of the first RRC message; and the uplink timing of the target signaling depends on the first timing advance command.

The uplink timing of the target signaling depends on the first timing advance command.

In an embodiment, compared with a conventional solution, this application has the following advantages.
- .The signaling process is beneficial for TA obtaining for early uplink synchronization of the conditional LTM.
- .The signaling process is beneficial for shortening a handover delay of conditional LTM.
- .The signaling process is beneficial for improving robustness of a handover process.
- .The signaling process is beneficial for a fast handover of a UE.
- .The signaling process is beneficial for transmitting TA obtained during early uplink synchronization for the plurality of candidate cells.
- .The signaling process is beneficial for determining validity of TA for early uplink synchronization.
- .The signaling process is beneficial for uplink alignment of a first candidate cell.

### BRIEF DESCRIPTION OF DRAWINGS

Other features, objectives, and advantages of this application become more apparent by reading the detailed descriptions of non-limiting embodiments with reference to the following drawings:
FIG. 1 is a flowchart of early TA obtaining for conditional LTM according to an embodiment of this application;
FIG. 2 is a schematic diagram of a network architecture according to an embodiment of this application;
FIG. 3 is a schematic diagram of an embodiment of radio protocol architectures of a user plane and a control plane according to an embodiment of this application;
FIG. 4 is a schematic diagram of a first communication device and a second communication device according to an embodiment of this application;
FIG. 5 is a flowchart of wireless signal transmission according to an embodiment of this application;
FIG. 6 is a schematic diagram of a first bitmap included in first signaling according to an embodiment of this application;
FIG. 7 is a schematic diagram of starting or restarting of a first timer according to an embodiment of this application;
FIG. 8 is a schematic diagram of relations between first time information and both of first signaling and a first timer according to an embodiment of this application;
FIG. 9 is a schematic diagram of storing a first timing advance command according to an embodiment of this application;
FIG. 10 is a block diagram of a structure of a processing apparatus used for a first node according to an embodiment of this application;
FIG. 11 is a block diagram of a structure of a processing apparatus used for a second node according to an embodiment of this application;
FIG. 12 a block diagram of a structure of a processing apparatus used for a third node according to an embodiment of this application; and
FIG. 13 is a schematic diagram of an artificial intelligence processing system according to an embodiment of this application.

### DESCRIPTION OF EMBODIMENTS

The technical solutions of this application are further described in detail below with reference to the accompanying drawings. It should be noted that, in a case of no conflict, embodiments and features in the embodiments of this application can be arbitrarily combined with each other.

### Embodiment 1

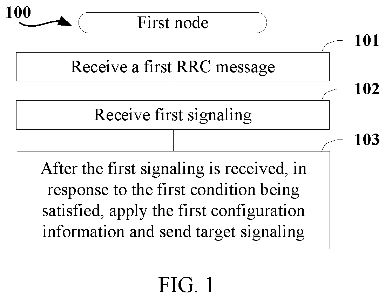

Embodiment 1 illustrates a flowchart of early TA obtaining of conditional LTM according to an embodiment of this application, as shown in FIG. 1. In FIG. 1, each box represents a step, and it should be particularly emphasized that an order of the boxes in the figure does not represent a temporal precedence relation between the represented steps.

In Embodiment 1, a first node in this application, in step 101, receives a first RRC message, where the first RRC message includes a first condition and first configuration information for a first candidate cell, the first configuration information includes physical layer configuration of the first candidate cell, and the first candidate cell is configured for a first serving cell; in step 102, receives first signaling, where the first signaling indicates the first candidate cell, and the first signaling indicates a first timing advance command; and in step 103, after the first signaling is received, in response to the first condition being satisfied, applies the first configuration information and sends target signaling, where the first signaling is signaling of a protocol layer below an RRC sublayer; when the first signaling is received, no random access process is ongoing; an uplink timing of the target signaling depends on the first timing advance command; and the first condition depends on measurement.

In an embodiment, the first RRC message is an RRC reconfiguration message.

In an embodiment, the first RRC message is an RRCReconfiguration message.

In an embodiment, the first RRC message includes at least the first condition.

In an embodiment, the first RRC message includes at least the first configuration information.

In an embodiment, the first RRC message is for configuring at least the first candidate cell.

In an embodiment, the first node sends a third message to the second node in response to receiving the first RRC message.

In an embodiment, the first node sends the third message to the second node in response to storing the first RRC message.

In an embodiment, the third message is an RRCReconfigurationComplete message.

In an embodiment, the first RRC message includes a ConditionalReconfiguration IE.

In an embodiment, the first RRC message includes a CondReconfigToAddModList IE.

In an embodiment, the CondReconfigToAddModList IE in the first RRC message includes one or more CondReconfigToAddMod fields.

In an embodiment, the first candidate cell is an LTM candidate cell.

In an embodiment, the first candidate cell is a conditional LTM candidate cell.

In an embodiment, the first candidate cell is a CHO candidate cell.

In an embodiment, the first candidate cell is a CPC candidate cell.

In an embodiment, the first candidate cell is a CPA candidate cell.

In an embodiment, the first candidate cell is a CPAC candidate cell.

In an embodiment, the first candidate cell is an SCPAC candidate cell.

In an embodiment, the first candidate cell is configured with only one TAG ID.

In an embodiment, the first candidate cell is configured with a plurality of TAG IDs.

In an embodiment, the first serving cell is a PCell of the first node.

In an embodiment, the first serving cell is an SPCell of the first node.

In an embodiment, the first serving cell is a PSCell of the first node.

In an embodiment, the first condition and the first configuration information are two fields in a same CondReconfigToAddMod field in the CondReconfigToAddModList IE.

In an embodiment, the first condition is configured by a condExecutionCond field.

In an embodiment, the first condition is configured by a condExecutionCondPSCell field.

In an embodiment, the first condition is configured by a condExecutionCondSCG field.

In an embodiment, the first configuration information is a ConditionalReconfiguration IE.

In an embodiment, the first configuration information includes a ConditionalReconfiguration IE.

In an embodiment, the first configuration information is a condRRCReconfig field.

In an embodiment, the first configuration information includes a condRRCReconfig field.

In an embodiment, the first configuration information is an LTM-Candidate IE.

In an embodiment, the first configuration information includes an LTM-Candidate IE.

In an embodiment, the first configuration information is an ltm-CandidateConfig field.

In an embodiment, the first configuration information includes an ltm-CandidateConfig field.

In an embodiment, the first configuration information is a SubsequentCondReconfig field.

In an embodiment, the first configuration information is information in a CondExecutionCondToReleaseList field and a CondExecutionCondToAddModList field.

In an embodiment, the first RRC message includes configuration for early uplink synchronization on the first candidate cell.

In an embodiment, the first configuration information includes configuration for early uplink synchronization on the first candidate cell.

In an embodiment, the configuration for early uplink synchronization on the first candidate cell is an EarlyUL-SyncConfig IE.

In an embodiment, the first condition is a set of conditions.

In a sub-embodiment of the foregoing embodiment, the set of conditions includes one or more sub-conditions.

In a sub-embodiment of the foregoing embodiment, the first condition is satisfied when all sub-conditions in the set of conditions are satisfied simultaneously.

In a sub-embodiment of the foregoing embodiment, the first condition is satisfied when any sub-condition in the set of conditions is satisfied.

In an embodiment, the first condition depends on measurement.

In a sub-embodiment of the foregoing embodiment, the measurement is L1 measurement.

In a sub-embodiment of the foregoing embodiment, the measurement is L3 measurement.

In a sub-embodiment of the foregoing embodiment, the measurement is L1 and L3 measurement.

In a sub-embodiment of the foregoing embodiment, the measurement is L1 or L3 measurement.

In a sub-embodiment of the foregoing embodiment, the measurement includes RSRP measurement.

In a sub-embodiment of the foregoing embodiment, the measurement includes RSRQ measurement.

In a sub-embodiment of the foregoing embodiment, the measurement includes CQI measurement.

In a sub-embodiment of the foregoing embodiment, the measurement includes SINR measurement.

In a sub-embodiment of the foregoing embodiment, the measurement includes reference signal path loss RSRP measurement.

In a sub-embodiment of the foregoing embodiment, the measurement includes measurement for an SSB.

In a sub-embodiment of the foregoing embodiment, the measurement includes measurement for a CSI-RS.

In a sub-embodiment of the foregoing embodiment, the measurement includes measurement for an SSB.

In a sub-embodiment of the foregoing embodiment, the measurement includes measurement for a PRS.

In a sub-embodiment of the foregoing embodiment, the measurement is inter-frequency measurement (inter-frequency measurement).

In a sub-embodiment of the foregoing embodiment, the measurement is intra-frequency measurement (intra-frequency measurement).

In a sub-embodiment of the foregoing embodiment, the measurement includes time measurement.

In an embodiment, the first condition includes that a measurement result of the measurement for the first candidate cell is higher than a threshold.

In an embodiment, the first condition includes that the measurement result of the measurement for the first candidate cell is higher than a measurement result of the first serving cell.

In an embodiment, the first condition includes that, within a given time interval, the measurement result of the measurement for the first candidate cell is higher than the measurement result of the first serving cell.

In an embodiment, the first condition includes that the measurement result of the measurement for the first candidate cell is higher than a threshold, and the measurement result of the measurement for the first serving cell is lower than a threshold.

In an embodiment, the first condition includes that the measurement result of the measurement for the first candidate cell is higher than a threshold within a given time interval, and the measurement result of the measurement for the first serving cell is lower than a threshold within the given time interval.

In an embodiment, the first condition includes that a location of the first node enters a first area, and the first area is for mobility management of the first candidate cell.

In an embodiment, the first area is pre-configured.

In an embodiment, the first area is configured by the first RRC message.

In an embodiment, the first condition includes that a distance from the first node to a first reference point is greater than a threshold, and a distance from the first node to a second reference point is less than a threshold. The first reference point and the second reference point are respectively for mobility management of the first serving cell and the first candidate cell.

In an embodiment, the first reference point and the second reference point are pre-configured.

In an embodiment, the first reference point and the second reference point are configured by the first RRC message.

In an embodiment, the first condition depends on measurement and the first condition depends on a decision of an AI module.

In an embodiment, the first condition depends on the decision of the AI module, and the decision of the AI module depends on measurement.

In an embodiment, the first signaling is a piece of DCI.

In an embodiment, the first signaling is a MAC CE.

In an embodiment, the first signaling is an Early Sync Timing Advance Command MAC CE.

In an embodiment, the first signaling is a Candidate Cell Timing Advance Command MAC CE.

In an embodiment, the first signaling is a Candidate Cell Early Sync Timing Advance Command MAC CE.

In an embodiment, a name of the first signaling includes at least "Candidate Cell".

In an embodiment, the name of the first signaling includes at least "Early Sync".

In an embodiment, the first signaling is not an LTM Cell Switch Command MAC CE.

In an embodiment, the first signaling indicates one or more candidate cells.

In an embodiment, the first signaling indicates one or more timing advance commands.

In an embodiment, the first candidate cell is one of the one or more candidate cells.

In an embodiment, the first timing advance command is one of the one or more timing advance commands.

In an embodiment, the first signaling explicitly indicates the first candidate cell.

In an embodiment, the first signaling implicitly indicates the first candidate cell.

In an embodiment, the first signaling indicates only the first candidate cell.

In an embodiment, the first signaling indicates a plurality of candidate cells, and the first candidate cell is one of the plurality of candidate cells.

In an embodiment, the first signaling indicates the first timing advance command of only the first candidate cell.

In an embodiment, the first signaling indicates a plurality of timing advance commands of only the first candidate cell.

In an embodiment, the first signaling indicates a plurality of candidate cells, the first signaling indicates at least one timing advance command for each of the plurality of candidate cells, the first candidate cell is one of the plurality of candidate cells, and the first timing advance command is one of the at least one timing advance command of the first candidate cell.

In an embodiment, the at least one timing advance command is only one timing advance command.

In an embodiment, the at least one timing advance command is a plurality of timing advance commands.

In an embodiment, the at least one timing advance command is one or more timing advance commands.

In an embodiment, the plurality of timing advance commands are two timing advance commands.

In an embodiment, the plurality of timing advance commands are more than two timing advance commands.

In an embodiment, the timing advance command indicates timing advance.

In an embodiment, the timing advance command is used to calculate timing advance.

In an embodiment, the timing advance command is a timing advance field.

In an embodiment, the first signaling indicates a TAG ID corresponding to the first timing advance command, and the first signaling indicates a plurality of timing advance commands of the first candidate cell.

In an embodiment, the first timing advance command is for the first candidate cell.

In an embodiment, a quantity of bits occupied by a field indicating the first candidate cell in the first signaling is fixed.

In an embodiment, the quantity of bits occupied by the field indicating the first candidate cell in the first signaling is variable.

In an embodiment, the quantity of bits occupied by the field indicating the first candidate cell in the first signaling depends on a quantity of candidate cells indicated by the first signaling.

In an embodiment, the quantity of bits occupied by the field indicating the first candidate cell in the first signaling depends on a quantity of candidate cells configured for the first serving cell.

In an embodiment, the quantity of bits occupied by the field indicating the first candidate cell in the first signaling is equal to floor(log2(the quantity of candidate cells indicated by the first signaling)).

In an embodiment, the quantity of bits occupied by the field indicating the first candidate cell in the first signaling is equal to floor(log2(the quantity of candidate cells configured for the first serving cell)).

In an embodiment, the quantity of bits occupied by the field indicating the first candidate cell in the first signaling is equal to floor(log2(the quantity of candidate cells indicated by the first signaling+1)).

In an embodiment, the quantity of bits occupied by the field indicating the first candidate cell in the first signaling is equal to floor(log2(the quantity of candidate cells configured for the first serving cell+1)).

In an embodiment, the quantity of bits occupied by the field indicating the first candidate cell in the first signaling is 3 bits.

In an embodiment, the quantity of bits occupied by the field indicating the first candidate cell in the first signaling is 4 bits.

In an embodiment, the quantity of bits occupied by the field indicating the first candidate cell in the first signaling is 5 bits.

In an embodiment, the quantity of bits occupied by the field indicating the first candidate cell in the first signaling is 6 bits.

In an embodiment, the quantity of bits occupied by the field indicating the first candidate cell in the first signaling is 7 bits.

In an embodiment, the quantity of bits occupied by the field indicating the first candidate cell in the first signaling is 8 bits.

In an embodiment, a quantity of bits occupied by the field for indicating the first timing advance command in the first signaling is 6 bits.

In an embodiment, the quantity of bits occupied by the field for indicating the first timing advance command in the first signaling is 8 bits.

In an embodiment, the quantity of bits occupied by the field for indicating the first timing advance command in the first signaling is 12 bits.

In an embodiment, the first timing advance command is used to indicate TA of the first candidate cell.

In an embodiment, the first timing advance command is used to indicate a relative value of the TA of the first candidate cell.

In a sub-embodiment of the foregoing embodiment, the first signaling indicates a first TAG ID, and the first timing advance command indicates a difference value of the TA of the first candidate cell relative to a current TA value of the first TAG.

In a sub-embodiment of the foregoing embodiment, the first signaling indicates the first TAG ID, and the first timing advance command indicates a difference value of the current TA value of the first TAG relative to the TA of the first candidate cell.

In a sub-embodiment of the foregoing embodiment, when the first signaling is received, if a TAG corresponding to the first TAG ID does not have valid TA, the TA of the first candidate cell indicated by the first timing advance command is invalid.

In a sub-embodiment of the foregoing embodiment, when the first signaling is received, if timeAlignmentTimer of the TAG corresponding to the first TAG ID has expired, the TA of the first candidate cell indicated by the first timing advance command is invalid.

In a sub-embodiment of the foregoing embodiment, the first timing advance command indicates a difference value between the current TA value of the first candidate cell and a PTAG of the first node.

In a sub-embodiment of the foregoing embodiment, the first timing advance command indicates a difference value between the PTAG of the first node and the current TA value of the first candidate cell.

In a sub-embodiment of the foregoing embodiment, when the first signaling is received, if the PTAG of the first node does not have valid TA, the TA of the first candidate cell indicated by the first timing advance command is invalid.

In a sub-embodiment of the foregoing embodiment, when the first signaling is received, if timeAlignmentTimer of the PTAG of the first node has expired, the TA of the first candidate cell indicated by the first timing advance command is invalid.

In an embodiment, the first timing advance command is used to indicate an absolute value of the TA of the first candidate cell.

In an embodiment, the first timing advance command indicates TA of a serving cell PTAG of the first node.

In an embodiment, the first timing advance command indicates an adjustment value for the TA of the serving cell PTAG of the first node.

In an embodiment, the first timing advance command indicates an absolute value of the TA of the serving cell PTAG of the first node.

In an embodiment, when a value of the field for indicating the first timing advance command in the first signaling is FFF, it represents that there is no valid TA on the first candidate cell.

In an embodiment, when all bits on the field for indicating the first timing advance command in the first signaling are 1, it represents that there is no valid TA on the first candidate cell.

In an embodiment, when there is no timing advance command for the first candidate cell in the first signaling, it represents that there is no valid TA on the first candidate cell.

In an embodiment, a quantity of bits occupied by the first signaling is fixed.

In an embodiment, the quantity of bits occupied by the first signaling is variable.

In an embodiment, the quantity of bits occupied by the first signaling depends on the quantity of candidate cells indicated by the first signaling.

In an embodiment, the quantity of bits occupied by the first signaling depends on the quantity of candidate cells configured for the first serving cell.

In an embodiment, the first signaling includes at least two octets (octet).

In an embodiment, the first signaling includes two octets.

In an embodiment, the first signaling includes a plurality of octets.

In an embodiment, the field indicating the first candidate cell and the field indicating the first timing advance command in the first signaling occupy two consecutive octets.

In an embodiment, the field indicating the first candidate cell and the field indicating the first timing advance command in the first signaling belong to different octets.

In an embodiment, the first signaling includes a plurality of timing advance commands.

In an embodiment, a quantity of timing advance commands included in the first signaling depends on the quantity of candidate cells configured for the first serving cell.

In an embodiment, the quantity of timing advance commands included in the first signaling depends on a quantity of candidate cells configured for the first serving cell and supporting uplink synchronization.

In an embodiment, the quantity of timing advance commands included in the first signaling depends on a quantity of candidate cells configured for the first serving cell, supporting advanced uplink synchronization, and configured with execution conditions.

In an embodiment, an order of the plurality of timing advance commands in the first signaling depends on an order of candidate cells in the first RRC message configuration.

In an embodiment, the order of the plurality of timing advance commands in the first signaling depends on an order of candidate cells in the first UE variable.

In an embodiment, the order of the plurality of timing advance commands in the first signaling depends on an order of candidate cells supporting early uplink synchronization in first RRC message configuration.

In an embodiment, the order of the plurality of timing advance commands in the first signaling depends on an order of candidate cells supporting early uplink synchronization in the first UE variable.

In an embodiment, the order of the plurality of timing advance commands in the first signaling depends on an order of candidate cells supporting early uplink synchronization and configured with execution conditions in first RRC message configuration.

In an embodiment, the order of the plurality of timing advance commands in the first signaling depends on an order of candidate cells supporting early uplink synchronization and configured with execution conditions in the first UE variable.

In an embodiment, in the plurality of timing advance commands in the first signaling, when all bits corresponding to a specific timing advance command are 1, it represents that a candidate cell corresponding to the timing advance command has no valid TA.

In an embodiment, in the plurality of timing advance commands in the first signaling, when a value of a specific timing advance command is FFF, it represents that a candidate cell corresponding to the timing advance command has no valid TA.

In an embodiment, in the plurality of timing advance commands in the first signaling, when not all bits corresponding to a specific timing advance command are 1, a value of the timing advance command represents valid TA of a candidate cell corresponding to the timing advance command.

In an embodiment, in the plurality of timing advance commands in the first signaling, when a value of a specific timing advance command is not FFF, the value of the timing advance command represents valid TA of a candidate cell corresponding to the timing advance command.

In an embodiment, in response to the first signaling being received, timeAlignmentTimer for uplink time alignment of the first candidate cell is not started or restarted.

In an embodiment, the applying the first configuration information refers to: applying the first configuration information stored in a UE variable of the first node.

In an embodiment, the sentence "in response to the first condition being satisfied, applies the first configuration information and sends target signaling" refers to: applying the first configuration information and sending the target signaling when the first condition is satisfied.

In an embodiment, the sentence "in response to the first condition being satisfied, applies the first configuration information and sends target signaling" refers to: once the first condition is satisfied, applying the first configuration information and sending the target signaling.

In an embodiment, the sentence "in response to the first condition being satisfied, applies the first configuration information and sends target signaling" refers to: if the first condition is satisfied, triggering applying the first configuration information and sending the target signaling.

In an embodiment, any random access process is on the first candidate cell.

In an embodiment, the any random access process is on a MAC entity to which the first serving cell belongs.

In an embodiment, the target signaling is a piece of PUCCH transmission.

In an embodiment, the target signaling is a piece of PUSCH transmission.

In an embodiment, the target signaling refers to an RRCReconfigurationComplete message.

In an embodiment, the target signaling refers to first uplink data transmission on the first candidate cell.

In an embodiment, that an uplink timing of the target signaling depends on the first timing advance command refers to: the first node using TA indicated by the first timing advance command as TA for the uplink of the target signaling.

In an embodiment, that an uplink timing of the target signaling depends on the first timing advance command refers to: the first node determining, based on the TA indicated by the first timing advance command, the uplink timing for sending the target signaling.

In an embodiment, if there is no valid TA for the first candidate cell when the target signaling is sent, fallback to RACH-based (RACH-based) LTM is implemented.

In an embodiment, if there is no valid TA for the first candidate cell when the first condition is satisfied, fallback to RACH-based LTM is implemented.

In an embodiment, if there is no valid TA for the first candidate cell when the target signaling is sent, fallback to RACH-based LTM is implemented.

In an embodiment, if there is no valid TA for the first candidate cell when the first condition is satisfied, fallback to RACH-based LTM is implemented.

In an embodiment, the action of falling back to RACH-based LTM refers to: when a contention-free random access (CFRA) resource is configured on the first candidate cell, falling back to CFRA-based LTM; otherwise, falling back to contention-based random access (CBRA)-based LTM.

In an embodiment, the first RRC message configures the CFRA resource on the first candidate cell.

In an embodiment, the first signaling configures the CFRA resource on the first candidate cell.

In an embodiment, the first signaling includes at least one of the CFRA resource on the first candidate cell and a timing advance command for the first candidate cell.

In an embodiment, the CFRA and CBRA are of 4-step.

In an embodiment, the CFRA and CBRA can be of 2-step.

In an embodiment, the CFRA and CBRA cannot be of 2-step.

In an embodiment, the LTM is conditional LTM.

In an embodiment, the LTM is continuous LTM.

In an embodiment, the LTM is continuous conditional LTM.

In an embodiment, the LTM is Conditional L1/L2 Triggered Mobility.

In an embodiment, the LTM is Cond-LTM.

In an embodiment, the LTM is CondLTM.

In an embodiment, the LTM is C-LTM.

In an embodiment, the LTM is CLTM.

In an embodiment, the LTM is Subsequent L1/L2 Triggered Mobility.

In an embodiment, the LTM is Subsequent-LTM.

In an embodiment, the LTM is S-LTM.

In an embodiment, the LTM is SLTM.

In an embodiment, the LTM is Subsequent Conditional L1/L2 Triggered Mobility.

In an embodiment, the LTM is Subsequent-Cond-LTM.

In an embodiment, the LTM is Subsequent-C-LTM.

In an embodiment, the LTM is S-C-LTM.

In an embodiment, the LTM is SCLTM.

### Embodiment 2

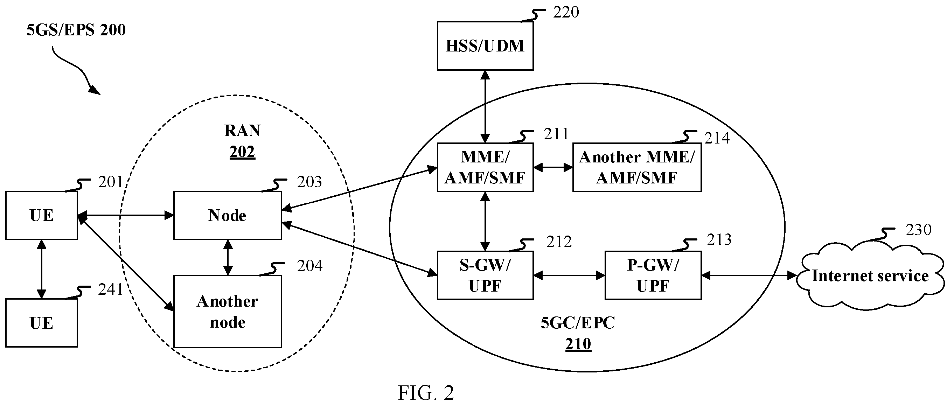

Embodiment 2 illustrates a schematic diagram of a network architecture according to an embodiment of this application, as shown in FIG. 2. FIG. 2 describes the network architecture 200 of a 5G NR (New Radio, new radio)/LTE (Long-Term Evolution, long term evolution)/LTE-A (Long-Term Evolution Advanced, long term evolution advanced) system. The 5G NR/LTE/LTE-A network architecture 200 may be referred to as a 5GS (5G System)/EPS (Evolved Packet System, evolved packet system) 200 or some other suitable term. The 5GS/EPS 200 includes at least one of a UE (User Equipment, user equipment) 201, a RAN (radio access network) 202, a 5GC (5G Core Network, 5G core network)/EPC (Evolved Packet Core, evolved packet core) 210, an HSS (Home Subscriber Server, home subscriber server)/UDM (Unified Data Management, unified data management) 220, and an internet service 230. The 5GS/EPS may be interconnected with another access network, but these entities/interfaces are not shown for simplicity. As shown in the figure, the 5GS/EPS provides a packet switching service. However, a person skilled in the art will readily understand that the various concepts presented throughout this application can be extended to a network providing a circuit switching service or another cellular network. The RAN includes a node 203 and another node 204. The node 203 provides user and control plane protocol termination towards the UE 201. The node 203 may be connected to the another node 204 through an Xn interface (for example, backhaul)/X2 interface. The node 203 may also be referred to as a base station, a base transceiver station, a radio base station, a radio transceiver, a transceiver function, a basic service set (BSS), an extended service set (ESS), a TRP (transmission reception point), or some other suitable term. The node 203 provides an access point to the 5GC/EPC 210 for the UE 201. Instances of the UE 201 include a cellular phone, a smartphone, a session initiation protocol (SIP) phone, a laptop computer, a personal digital assistant (PDA), satellite radio, non-terrestrial base station communication, satellite mobile communication, a global positioning system, a multimedia apparatus, a video apparatus, a digital audio player (for example, an MP3 player), a camera, a game console, a drone, a flying machine, a narrowband internet of things device, a machine type communication device, a land vehicle, an automobile, a wearable device, or any other similar functional apparatus. A person skilled in the art may also refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable term. The node 203 is connected to the 5GC/EPC 210 through an S1/NG interface. The 5GC/EPC 210 includes an MME (Mobility Management Entity, mobility management entity)/AMF (Authentication Management Field, authentication management field)/SMF (Session Management Function, session management function) 211, another MME/AMF/SMF 214, an S-GW (Service Gateway, service gateway)/UPF (User Plane Function, user plane function) 212, and a P-GW (Packet Data Network Gateway, packet data network gateway)/UPF 213. The MME/AMF/SMF 211 is a control node that processes signaling between the UE 201 and the 5GC/EPC 210. Generally, the MME/AMF/SMF 211 provides bearer and connection management. All user IP (Internet Protocal, internet protocol) packets are transmitted through the S-GW/UPF 212, and the S-GW/UPF 212 itself is connected to P-GW/UPF 213. The P-GW provides UE IP address allocation and another function. The P-GW/UPF 213 is connected to the internet service 230. The internet service 230 includes an operator-corresponding internet protocol service, which may specifically include an internet, an intranet, an IMS (IP Multimedia Subsystem, IP multimedia subsystem), and a packet switching streaming service.

In an embodiment, the UE 201 corresponds to the first node in this application.

In an embodiment, the UE 201 is a user equipment (User Equipment, UE).

In an embodiment, the UE 201 is a base station (Base Station, BS) device.

In an embodiment, the UE 201 is a relay (Relay) device.

In an embodiment, the UE 201 is a gateway (Gateway) device.

In an embodiment, the node 203 corresponds to the second node in this application.

In an embodiment, the node 203 is a base station device.

In an embodiment, the node 203 is a user equipment.

In an embodiment, the node 203 is a relay device.

In an embodiment, the node 203 is a gateway device.

Typically, the UE 201 is a user equipment, and the node 203 is a base station device.

Typically, the UE 201 is a user equipment, and the node 203 is a user equipment.

Typically, the UE 201 is a base station device, and the node 203 is a base station device.

In an embodiment, the user equipment supports non-terrestrial network (Non-Terrestrial Network, NTN) transmission.

In an embodiment, the user equipment supports terrestrial network (Terrestrial Network, terrestrial network) transmission.

In an embodiment, the user equipment supports dual connection (Dual Connection, DC) transmission.

In an embodiment, the user equipment includes a flying machine.

In an embodiment, the user equipment includes a vehicle-mounted terminal.

In an embodiment, the user equipment includes a vessel.

In an embodiment, the user equipment includes an internet of things terminal.

In an embodiment, the user equipment includes an industrial internet of things terminal.

In an embodiment, the user equipment includes a device that supports low-latency and high-reliability transmission.

In an embodiment, the user equipment includes a test device.

In an embodiment, the user equipment includes a signaling tester.

In an embodiment, the user equipment includes an IAB (Integrated Access and Backhaul)-MT (Mobile Termination, mobile termination).

In an embodiment, the base station device supports non-terrestrial network transmission.

In an embodiment, the base station device supports terrestrial network transmission.

In an embodiment, the base station device includes a base transceiver station (Base Transceiver Station, BTS).

In an embodiment, the base station device includes a NodeB (NodeB, NB).

In an embodiment, the base station device includes a gNB.

In an embodiment, the base station device includes an eNB.

In an embodiment, the base station device includes an ng-eNB.

In an embodiment, the base station device includes an en-gNB.

In an embodiment, the base station device includes a CU (Centralized Unit, central unit).

In an embodiment, the base station device includes a DU (Distributed Unit, distributed unit).

In an embodiment, the base station device includes a TRP (Transmitter Receiver Point, transmission reception point).

In an embodiment, the base station device includes a macro cellular (Macro Cellular) base station.

In an embodiment, the base station device includes a micro cell (Micro Cell) base station.

In an embodiment, the base station device includes a pico cell (Pico Cell) base station.

In an embodiment, the base station device includes a femtocell (Femtocell).

In an embodiment, the base station device includes a flying platform device.

In an embodiment, the base station device includes a satellite device.

In an embodiment, the base station device includes a test device.

In an embodiment, the base station device includes a signaling tester.

In an embodiment, the base station device includes a gateway device.

In an embodiment, the base station device includes an IAB-node.

In an embodiment, the base station device includes an IAB-donor.

In an embodiment, the base station device includes an IAB-donor-CU.

In an embodiment, the base station device includes an IAB-donor-DU.

In an embodiment, the base station device includes an IAB-DU.

In an embodiment, the base station device includes an IAB-MT.

In an embodiment, the relay device includes a relay.

In an embodiment, the relay device includes an L3 relay.

In an embodiment, the relay device includes an L2 relay.

In an embodiment, the relay device includes a router.

In an embodiment, the relay device includes a switch.

In an embodiment, the relay device includes a gateway device.

In an embodiment, the relay device includes a user equipment.

In an embodiment, the relay device includes a base station device.

### Embodiment 3

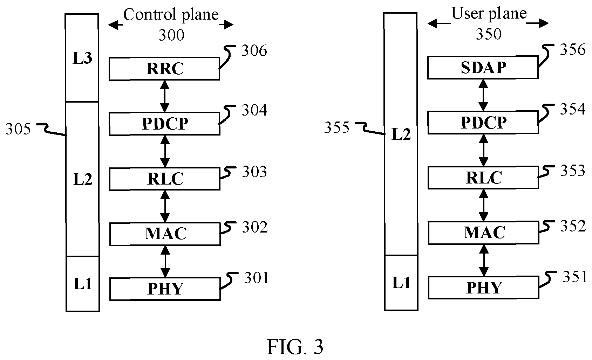

Embodiment 3 illustrates a schematic diagram of an embodiment of radio protocol architectures for a user plane and a control plane according to this application, as shown in FIG. 3. FIG. 3 is a schematic diagram illustrating the embodiment of the radio protocol architectures used for the user plane 350 and the control plane 300, and FIG. 3 shows, with three layers of a layer 1, a layer 2, and a layer 3, a radio protocol architecture for the control plane 300. The layer 1 (L1 layer) is a lowest layer and implements various PHY (physical layer) signal processing functions. The L1 layer is referred to as a PHY 301 herein. The layer 2 (L2 layer) 305 is above the PHY 301 and includes a MAC (Medium Access Control, medium access control) sublayer 302, an RLC (Radio Link Control, radio link control protocol) sublayer 303, and a PDCP (Packet Data Convergence Protocol, packet data convergence protocol) sublayer 304. The PDCP sublayer 304 provides multiplexing between different radio bearers and logical channels. The PDCP sublayer 304 also provides security by encrypting a data packet, and provides inter-cell mobility support. The RLC sublayer 303 provides segmentation and reassembly of an upper layer data packet, retransmission of a lost data packet, and reordering of data packets to compensate for out-of-order receiving due to a HARQ (Hybrid Automatic Repeat Request, hybrid automatic repeat request). The MAC sublayer 302 provides multiplexing between logical and transport channels. The MAC sublayer 302 is also responsible for allocating various radio resources (for example, resource blocks) in a cell. The MAC sublayer 302 is also responsible for a HARQ operation. An RRC (Radio Resource Control, radio resource control) sublayer 306 at the layer 3 (L3 layer) in the control plane 300 is responsible for obtaining a radio resource (for example, a radio bearer) and configuring a lower layer using RRC signaling. A radio protocol architecture for the user plane 350 includes a layer 1 (L1 layer) and a layer 2 (L2 layer). In the user plane 350, the radio protocol architecture for a physical layer 351, a PDCP sublayer 354 at the L2 layer 355, an RLC sublayer 353 at the L2 layer 355, and a MAC sublayer 352 at the L2 layer 355 is largely the same as corresponding layers and sublayers in the control plane 300, but the PDCP sublayer 354 also provides header compression for an upper layer data packet to reduce radio transmission overheads. The L2 layer 355 in the user plane 350 also includes an SDAP (Service Data Adaptation Protocol, service data adaptation protocol) sublayer 356. The SDAP sublayer 356 is responsible for mapping between a QoS flow and a data radio bearer (DRB, Data Radio Bearer) to support service diversity.

In an embodiment, the radio protocol architecture in FIG. 3 is applicable to the first node described in this application.

In an embodiment, the radio protocol architecture in FIG. 3 is applicable to the second node described in this application.

In an embodiment, the radio protocol architecture in FIG. 3 is applicable to the third node described in this application.

In an embodiment, the first RRC message in this application is generated at the RRC 306.

In an embodiment, the first DCI in this application is generated at the MAC 302 or the MAC 352.

In an embodiment, the first DCI in this application is generated at the PHY 301 or the PHY 351.

In an embodiment, the first signaling in this application is generated at the MAC 302 or the MAC 352.

In an embodiment, the first signaling in this application is generated at the PHY 301 or the PHY 351.

In an embodiment, the first preamble in this application is generated at the MAC 302 or the MAC 352.

In an embodiment, the first preamble in this application is generated at the PHY 301 or the PHY 351.

In an embodiment, the second message in this application is generated at the RRC 306.

In an embodiment, the second message in this application is generated at the MAC 302 or the MAC 352.

In an embodiment, the second message in this application is generated at the PHY 301 or the PHY 351.

In an embodiment, the target signaling in this application is generated at the RRC 306.

In an embodiment, the target signaling in this application is generated at the MAC 302 or the MAC 352.

In an embodiment, the target signaling in this application is generated at the PHY 301 or the PHY 351.

### Embodiment 4

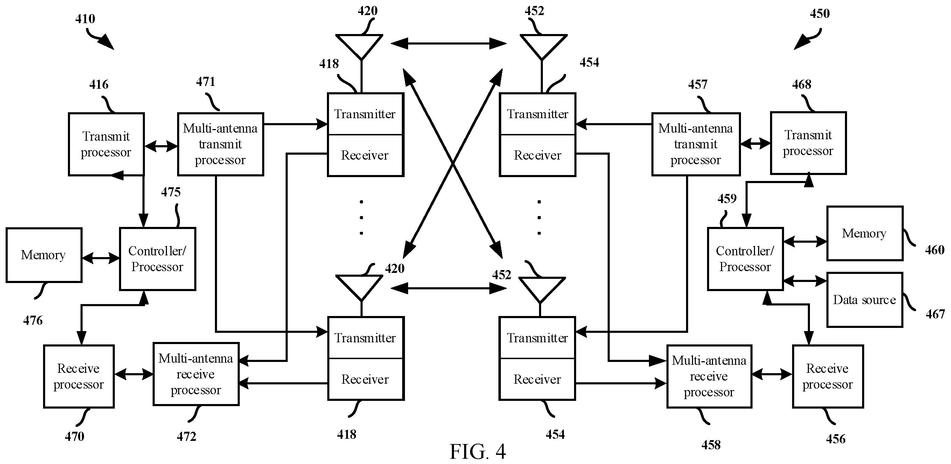

Embodiment 4 illustrates a schematic diagram of a first communication device and a second communication device according to this application, as shown in FIG. 4. FIG. 4 is a block diagram of a first communication device 450 and a second communication device 410 communicating with each other in an access network.

The first communication device 450 includes a controller/processor 459, a memory 460, a data source 467, a transmit processor 468, a receive processor 456, a multi-antenna transmit processor 457, a multi-antenna receive processor 458, a transmitter/receiver 454, and an antenna 452.

The second communication device 410 includes a controller/processor 475, a memory 476, a receive processor 470, a transmit processor 416, a multi-antenna receive processor 472, a multi-antenna transmit processor 471, a transmitter/receiver 418, and an antenna 420.

During transmission from the second communication device 410 to the first communication device 450, at the second communication device 410, an upper layer data packet from a core network is provided for the controller/processor 475. The controller/processor 475 implements a function of the L2 layer. During transmission from the second communication device 410 to the first communication device 450, the controller/processor 475 provides header compression, encryption, packet segmentation and reordering, multiplexing between a logical channel and a transport channel, and allocation of radio resources of the first communication device 450 based on various priority metrics. The controller/processor 475 is further responsible for retransmission of a lost packet, and signaling to the first communication device 450. The transmit processor 416 and the multi-antenna transmit processor 471 implement various signal processing functions of an L1 layer (namely, a physical layer). The transmit processor 416 implements encoding and interleaving to facilitate forward error correction (FEC) at the second communication device 410, and mapping of signal clusters based on various modulation schemes (such as binary phase shift keying (BPSK), quadrature phase shift keying (QPSK), M-ary phase shift keying (M-PSK), and M-ary quadrature amplitude modulation (M-QAM)). The multi-antenna transmit processor 471 performs digital space precoding, including codebook-based precoding and non-codebook-based precoding, on an encoded and modulated symbol, and beamforming processing, to generate one or more spatial streams. The transmit processor 416 then maps each spatial stream to a subcarrier, multiplexes the mapped spatial stream with a reference signal (for example, a pilot) in time domain and/or frequency domain, and then uses inverse fast Fourier transform (IFFT) to generate a physical channel that carries a time-domain multicarrier symbol stream. Subsequently, the multi-antenna transmit processor 471 performs an operation of analog precoding sending/beamforming on the time-domain multicarrier symbol stream. Each transmitter 418 converts a baseband multicarrier symbol stream provided by the multi-antenna transmit processor 471 into a radio frequency stream, and then provides the radio frequency stream for different antennas 420.

During transmission from the second communication device 410 to the first communication device 450, at the first communication device 450, each receiver 454 receives a signal through a corresponding antenna 452 of the receiver 454. Each receiver 454 recovers information modulated onto a radio frequency carrier, converts a radio frequency stream into a baseband multicarrier symbol stream, and provides the baseband multicarrier symbol stream for the receive processor 456. The receive processor 456 and the multi-antenna receive processor 458 implement various signal processing functions of the L1 layer. The multi-antenna receive processor 458 performs an operation of analog precoding receiving/beamforming on the baseband multicarrier symbol stream from the receiver 454. The receive processor 456 converts, from time domain to frequency domain via fast Fourier transform (FFT), the baseband multicarrier symbol stream obtained after the operation of analog precoding receiving/beamforming. In frequency domain, a physical-layer data signal and a reference signal are demultiplexed by the receive processor 456. The reference signal is used for channel estimation; and the data signal is recovered after multi-antenna detection performed by the multi-antenna receive processor 458, to obtain any spatial stream that uses the first communication device 450 as a destination. A symbol on each spatial stream is demodulated and recovered in the receive processor 456, and a soft decision is generated. The receive processor 456 then decodes and de-interleaves the soft decision to recover upper layer data and a control signal transmitted by the second communication device 410 on a physical channel. The upper layer data and the control signal are then provided for the controller/processor 459. The controller/processor 459 implements the function of the L2 layer. The controller/processor 459 may be associated with the memory 460 that stores program code and data. The memory 460 may be referred to as a computer-readable medium. During transmission from the second communication device 410 to the first communication device 450, the controller/processor 459 provides demultiplexing between a transport channel and a logical channel, packet reassembly, decryption, header decompression, and control signal processing, to recover the upper layer data packet from the core network. The upper layer data packet is then provided for all protocol layers above the L2 layer, or various control signals may be provided for an L3 for processing by the L3.

During transmission from the first communication device 450 to the second communication device 410, at the first communication device 450, an upper layer data packet is provided for the controller/processor 459 by using the data source 467. The data source 467 represents all protocol layers above the L2 layer. Similar to the sending function, at the second communication device 410, described during the transmission from the second communication device 410 to the first communication device 450, the controller/processor 459 implements header compression, encryption, packet segmentation and reordering, and multiplexing between a logical channel and a transport channel based on radio resource allocation, to implement an L2 layer function for a user plane and a control plane. The controller/processor 459 is further responsible for retransmission of a lost packet, and signaling to the second communication device 410. The transmit processor 468 performs modulation mapping and channel encoding processing, and the multi-antenna transmit processor 457 performs digital multi-antenna spatial precoding, including codebook-based precoding and non-codebook-based precoding, and beam forming processing. Then the transmit processor 468 modulates a generated spatial stream into a multicarrier/single-carrier symbol stream, and the multicarrier/single-carrier symbol stream is provided for different antennas 452 by using the transmitter 454 after undergoing an analog precoding/beamforming operation in the multi-antenna transmit processor 457. Each transmitter 454 first converts a baseband symbol stream provided by the multi-antenna transmit processor 457 into a radio frequency symbol stream, and then provides the radio frequency symbol stream for the antenna 452.

During transmission from the first communication device 450 to the second communication device 410, a function at the second communication device 410 is similar to the receiving function, at the first communication device 450, described during the transmission from the second communication device 410 to the first communication device 450. Each receiver 418 receives a radio frequency signal through a corresponding antenna 420 of the receiver 418, converts the received radio frequency signal into a baseband signal, and provides the baseband signal for the multi-antenna receive processor 472 and the receive processor 470. The receive processor 470 and the multi-antenna receive processor 472 jointly implement the function of the L1 layer. The controller/processor 475 implements the function of the L2 layer. The controller/processor 475 may be associated with the memory 476 that stores program code and data. The memory 476 may be referred to as a computer-readable medium. During transmission from the first communication device 450 to the second communication device 410, the controller/processor 475 provides demultiplexing between a transport channel and a logical channel, packet reassembly, decryption, header decompression, and control signal processing, to recover an upper layer data packet from the UE 450. An upper layer data packet from the controller/processor 475 may be provided for a core network.

In an embodiment, the first communication device 450 includes at least one processor and at least one memory, and the at least one memory includes computer program code. The at least one memory and the computer program code are configured to be used with the at least one processor. The first communication device 450 at least: receives a first RRC message, where the first RRC message includes a first condition and first configuration information for a first candidate cell, the first configuration information includes physical layer configuration of the first candidate cell, the first candidate cell is configured for a first serving cell; receives first signaling, where the first signaling indicates the first candidate cell, the first signaling indicates a first timing advance command; and after the first signaling is received, in response to the first condition being satisfied, applies the first configuration information and sends target signaling, where the first signaling is signaling of a protocol layer below an RRC sublayer; when the first signaling is received, no random access process is ongoing; an uplink timing of the target signaling depends on the first timing advance command; and the first condition depends on measurement.

In an embodiment, the first communication device 450 includes a memory storing a computer-readable instruction program. The computer-readable instruction program, when executed by at least one processor, generates actions, and the actions include: receiving a first RRC message, where the first RRC message includes a first condition and first configuration information for a first candidate cell, the first configuration information includes physical layer configuration of the first candidate cell, and the first candidate cell is configured for a first serving cell; receiving first signaling, where the first signaling indicates the first candidate cell, the first signaling indicates a first timing advance command; and after the first signaling is received, in response to the first condition being satisfied, applying the first configuration information and sending target signaling, where the first signaling is signaling of a protocol layer below an RRC sublayer; when the first signaling is received, no random access process is ongoing; an uplink timing of the target signaling depends on the first timing advance command; the first condition depends on measurement.

In an embodiment, the second communication device 410 includes at least one processor and at least one memory, the at least one memory includes computer program code, and the at least one memory and the computer program code are configured to be used with the at least one processor. The second communication device 410 at least: sends a first RRC message, where the first RRC message includes a first condition and first configuration information for a first candidate cell, the first configuration information includes physical layer configuration of the first candidate cell, and the first candidate cell is configured for a first serving cell; and sends first signaling, where the first signaling indicates the first candidate cell, the first signaling indicates a first timing advance command; and after the first signaling is received, in response to the first condition being satisfied, a recipient of the first signaling applies the first configuration information and sends target signaling, where an uplink timing of the target signaling depends on the first timing advance command; the first signaling is signaling of a protocol layer below an RRC sublayer; when the first signaling is received, no random access process is ongoing; and the first condition depends on measurement.

In an embodiment, the second communication device 410 includes a memory storing a computer-readable instruction program. The computer-readable instruction program, when executed by at least one processor, generates actions, and the actions include: sending a first RRC message, where the first RRC message includes a first condition and first configuration information for a first candidate cell, the first configuration information includes physical layer configuration of the first candidate cell, the first candidate cell is configured for a first serving cell; and sending first signaling, where the first signaling indicates the first candidate cell, the first signaling indicating a first timing advance command; and after the first signaling is received, in response to the first condition being satisfied, a recipient of the first signaling applies the first configuration information and sends target signaling, where an uplink timing of the target signaling depends on the first timing advance command; the first signaling is signaling of a protocol layer below an RRC sublayer; when the first signaling is received, no random access process is ongoing; and the first condition depends on measurement.

In an embodiment, the second communication device 410 includes a memory storing a computer-readable instruction program. The computer-readable instruction program, when executed by at least one processor, generates actions, and the actions include: receiving a first preamble on a first candidate cell; in response to receiving the first preamble, sending a second message to a second node, where the second message triggers first signaling, the first signaling indicates the first candidate cell, and the first signaling indicates a first timing advance command; and receiving target signaling, where a first RRC message includes a first condition and first configuration information for the first candidate cell, the first configuration information includes physical layer configuration of the first candidate cell, and the first candidate cell is configured for a first serving cell; the first RRC message includes random access configuration information for the first candidate cell, and the random access configuration information includes at least one of an uplink carrier, an SSB, or a PRACH mask that is associated with the first preamble; the first signaling is signaling of a protocol layer below an RRC sublayer; when the first signaling is received, no random access process is ongoing; an uplink timing of the target signaling depends on the first timing advance command; after the first signaling is received, in response to the first condition being satisfied, a recipient of the first signaling applies the first configuration information and sends the target signaling; the recipient of the first signaling is a recipient of the first RRC message; and the uplink timing of the target signaling depends on the first timing advance command.

In an embodiment, the second communication device 410 includes a memory storing a computer-readable instruction program. The computer-readable instruction program, when executed by at least one processor, generates actions, and the actions include: receiving a first preamble on a first candidate cell; in response to receiving the first preamble, sending a second message to a second node, where the second message triggers first signaling, the first signaling indicates the first candidate cell, and the first signaling indicates a first timing advance command; and receiving target signaling, where a first RRC message includes a first condition and first configuration information for the first candidate cell, the first configuration information includes physical layer configuration of the first candidate cell, and the first candidate cell is configured for a first serving cell; the first RRC message includes random access configuration information for the first candidate cell, and the random access configuration information includes at least one of an uplink carrier, an SSB, or a PRACH mask that is associated with the first preamble; the first signaling is signaling of a protocol layer below an RRC sublayer; when the first signaling is received, no random access process is ongoing; an uplink timing of the target signaling depends on the first timing advance command; after the first signaling is received, in response to the first condition being satisfied, a recipient of the first signaling applies the first configuration information and sends the target signaling; the recipient of the first signaling is a recipient of the first RRC message; and the uplink timing of the target signaling depends on the first timing advance command.

In an embodiment, at least one of the antenna 452, the receiver 454, the receive processor 456, and the controller/processor 459 is used to receive the first RRC message.

In an embodiment, at least one of the antenna 420, the transmitter 418, the transmit processor 416, and the controller/processor 475 is used to send the first RRC message.

In an embodiment, at least one of the antenna 452, the receiver 454, the receive processor 456, and the controller/processor 459 is used to receive the first DCI.

In an embodiment, at least one of the antenna 420, the transmitter 418, the transmit processor 416, and the controller/processor 475 is used to send the first DCI.

In an embodiment, at least one of the antenna 452, the transmitter 454, the transmit processor 468, and the controller/processor 459 is used to send the first preamble.

In an embodiment, at least one of the antenna 420, the receiver 418, the receive processor 470, and the controller/processor 475 is used to receive the first preamble.

In an embodiment, at least one of the antenna 452, the receiver 454, the receive processor 456, and the controller/processor 459 is used to receive the first signaling.

In an embodiment, at least one of the antenna 420, the transmitter 418, the transmit processor 416, and the controller/processor 475 is used to send the first signaling.

In an embodiment, at least one of the antenna 452, the transmitter 454, the transmit processor 468, and the controller/processor 459 is used to send the target signaling.

In an embodiment, at least one of the antenna 420, the receiver 418, the receive processor 470, and the controller/processor 475 is used to receive the target signaling.

In an embodiment, the first communication device 450 corresponds to a first node in this application.

In an embodiment, the second communication device 410 corresponds to a second node in this application.

In an embodiment, the second communication device 410 corresponds to a third node in this application.

In an embodiment, the first communication device 450 is a user equipment.

In an embodiment, the first communication device 450 is a base station device.

In an embodiment, the first communication device 450 is a relay device.

In an embodiment, the second communication device 410 is a user equipment.

In an embodiment, the second communication device 410 is a base station device.

In an embodiment, the second communication device 410 is a relay device.

In an embodiment, the third communication device 410 is a user equipment.

In an embodiment, the third communication device 410 is a base station device.

In an embodiment, the third communication device 410 is a relay device.

### Embodiment 5

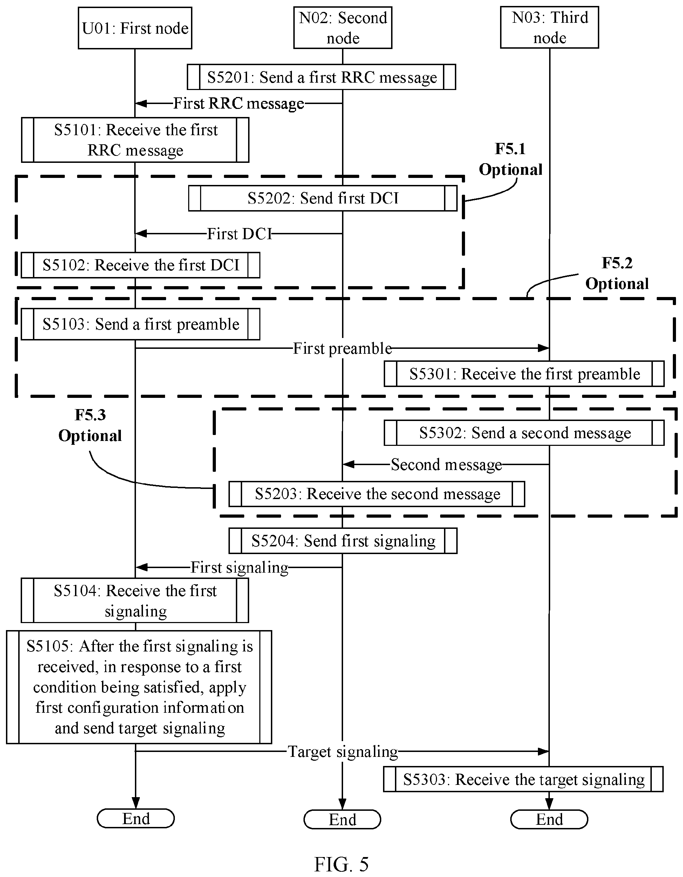

Embodiment 5 illustrates a flowchart of transmission of a wireless signal according to an embodiment of this application, as shown in FIG. 5. It should be particularly noted that an order in this example does not limit an order of signal transmission and an order of implementation in this application.

For a first node U01:
In step S5101, receive a first RRC message.
In step S5102, receive first DCI.
In step S5103, before first signaling is received, send a first preamble on a first candidate cell; and in response to sending the first preamble on the first candidate cell, determine that a random access process corresponding to the first preamble is successfully completed.
In step S5104, receive first signaling.
In step S5105, after the first signaling is received, in response to a first condition being satisfied, apply first configuration information and send target signaling.

For a second node N02:
In step S5201, send a first RRC message.
In step S5202, send first DCI.
In step S5203, receive a second message.
In step S5204: send first signaling.

For a third node N03:
In step S5301, receive the first preamble.
In step S5302, send the second message.
In step S5303, receive the target signaling.

In Embodiment 5, the first RRC message includes a first condition and first configuration information for a first candidate cell, the first configuration information includes physical layer configuration of the first candidate cell, and the first candidate cell is configured for a first serving cell; the first signaling indicates the first candidate cell, and the first signaling indicates a first timing advance command; the first signaling is signaling of a protocol layer below an RRC sublayer; when the first signaling is received, no random access process is ongoing; an uplink timing of the target signaling depends on the first timing advance command; the first condition depends on measurement; the first RRC message includes random access configuration information for the first candidate cell, and the random access configuration information includes at least one of an uplink carrier, an SSB, or a PRACH mask that is associated with the first preamble; the DCI indicates an index of the first preamble; and the first DCI triggers the first preamble.

In an embodiment, the first node U01 and the second node N02 are connected in a wireless manner.

In an embodiment, the first node U01 and the second node N02 are connected in a wired manner.

In an embodiment, the first node U01 and the second node N02 are connected through a Uu interface.

In an embodiment, the first node U01 and the second node N02 are connected through an IAB interface.

In an embodiment, the first node U01 and the second node N02 are connected through a PC5 interface.

In an embodiment, the first node U01 and the third node N03 are connected in a wireless manner.

In an embodiment, the first node U01 and the third node N03 are connected in a wired manner.

In an embodiment, the first node U01 and the third node N03 are connected through a Uu interface.

In an embodiment, the first node U01 and the third node N03 are connected through an IAB interface.

In an embodiment, the first node U01 and the third node N03 are connected through a PC5 interface.

In an embodiment, the second node U02 and the third node N03 are connected in a wireless manner.

In an embodiment, the second node U02 and the third node N03 are connected in a wired manner.

In an embodiment, the second node U02 and the third node N03 are connected through a Uu interface.

In an embodiment, the second node U02 and the third node N03 are connected through an IAB interface.

In an embodiment, the second node U02 and the third node N03 are connected through a PC5 interface.

In an embodiment, the second node U02 and the third node N03 are connected through an Xn interface.

In an embodiment, the second node U02 and the third node N03 are connected through an X2 interface.

In an embodiment, the second node U02 is the third node N03.

In an embodiment, the second node U02 is not the third node N03.

In an embodiment, a dashed box F5.1 is optional.

In an embodiment, the dashed box F5.1 exists.

In an embodiment, the dashed box F5.1 does not exist.

In an embodiment, a dashed box F5.2 is optional.

In an embodiment, the dashed box F5.2 exists.

In an embodiment, the dashed box F5.2 does not exist.

In an embodiment, a dashed box F5.3 is optional.

In an embodiment, the dashed box F5.3 exists.

In an embodiment, the dashed box F5.3 does not exist.

In an embodiment, when the dashed box F5.1 exists, the dashed box F5.2 exists.

In an embodiment, the dashed box F5.1 is before the dashed box F5.2.

In an embodiment, the action of receiving the first preamble refers to: receiving the first preamble.

In an embodiment, the action of receiving the first preamble refers to: detecting the first preamble.

In an embodiment, the action of receiving the first preamble refers to: listening to the first preamble.

In an embodiment, the action of receiving the first preamble refers to: decoding the first preamble.

In an embodiment, the action of receiving the first preamble refers to: identifying the first preamble.

In an embodiment, the second message is transmitted through a terrestrial interface.

In an embodiment, the second message is an XnAP message.

In an embodiment, the second message is an NGAP message.

In an embodiment, the second message is an RRC message.

In an embodiment, in response to the second message being received, the second node N02 sends the first signaling.

In an embodiment, the second message indicates the first timing advance command.

In an embodiment, the second node N02 determines the first timing advance command.

In an embodiment, the second node N02 determines the first timing advance command based on an uplink signal.

In an embodiment, the second node N02 determines the first timing advance command based on the first preamble.

In an embodiment, the second node N02 determines the first timing advance command based on implementation.

In an embodiment, in response to receiving the first RRC message, second signaling is received.

In an embodiment, in response to receiving the second signaling, the first preamble is sent on the first candidate cell.

In an embodiment, a field ltm-EarlyUL-SyncConfig-r18 in the first RRC message configures the random access configuration information of the first candidate cell.

In an embodiment, a field ltm-EarlyUL-SyncConfig-r19 in the first RRC message configures the random access configuration information of the first candidate cell.

In an embodiment, a field EarlyUL-SyncConfig in the first RRC message configures the random access configuration information of the first candidate cell.

In an embodiment, a field RACH-ConfigGeneric in the first RRC message configures the random access configuration information of the first candidate cell.

In an embodiment, the random access configuration information includes an uplink TA offset n-TimingAdvanceOffset of the first candidate cell.

In an embodiment, the random access configuration information includes ssb-PerRACH-Occasion of the first candidate cell.

In an embodiment, the random access configuration information includes a PRACH subcarrier spacing for LTM of the first candidate cell.

In an embodiment, the second signaling is a PDCCH order.

In an embodiment, the second signaling is format 1_0 DCI.

In an embodiment, the second signaling indicates the first preamble.

In an embodiment, the second signaling configures the random access configuration information of the first candidate cell.

In an embodiment, the second signaling indicates the first preamble from the random access configuration information of the first candidate cell configured by the first RRC message.

In an embodiment, the second signaling indicates a preamble index of the first preamble.

In an embodiment, the second signaling indicates whether an uplink carrier of the first preamble is an SUL.

In an embodiment, the second signaling indicates an SS/PBCH index of the first preamble.

In an embodiment, the second signaling indicates a PRACH mask index of the first preamble.

In an embodiment, the second signaling indicates a sending cell of the first preamble.

In an embodiment, the sending cell of the first preamble is the first candidate cell.

In an embodiment, the second signaling indicates whether the first preamble is retransmitted.

In an embodiment, the second signaling includes a retransmission indication of the first preamble.

In an embodiment, in response to receiving the first RRC message, the first preamble is sent.

In an embodiment, the first RRC message configures random access configuration information of the first preamble.

In an embodiment, the first RRC message includes a first subfield, and the first subfield configures the random access configuration information of the first preamble.

In an embodiment, the first subfield is an RACH-ConfigDedicated IE.

In an embodiment, the first subfield is an earlyUL-syncConfigDedicated IE.

In an embodiment, the first subfield is an earlyUL-SyncCFRA-Config field.

In an embodiment, the first subfield is an earlyRACH-CFRA-Config field.

In an embodiment, the first subfield is an earlyTA-CFRA-Config field.

In an embodiment, a name of the first subfield includes at least earlyUL-sync.

In an embodiment, the name of the first subfield includes at least earlyUL.

In an embodiment, the name of the first subfield includes at least earlyRACH.

In an embodiment, the name of the first subfield includes at least early.

In an embodiment, the name of the first subfield includes at least CFRA.

In an embodiment, the name of the first subfield includes at least RACH.

In an embodiment, the first subfield includes an RACH-ConfigDedicated field.

In an embodiment, the first subfield includes a CFRA field.

In an embodiment, the first subfield configures the sending cell of the first preamble.

In an embodiment, the first subfield configures the first candidate cell as the sending cell of the first preamble.

In an embodiment, the first subfield configures an associated SSB resource of the first preamble.

In an embodiment, the first subfield configures an associated SSB-Index of the first preamble.

In an embodiment, the first subfield configures a preamble index of the first preamble.

In an embodiment, the first subfield configures an RA occasion of the first preamble.

In an embodiment, the first subfield configures a PRACH mask index of the first preamble.

In an embodiment, the first node sends the first preamble in a plurality of times.

In an embodiment, the first subfield configures a quantity of repetitions for sending the first preamble.

In an embodiment, the first subfield configures a repetition period for sending the first preamble.

In an embodiment, the first subfield configures a power boosting step size for sending the first preamble.

In an embodiment, the first subfield configures a maximum power limit for sending the first preamble.

In an embodiment, the first preamble is for early uplink synchronization.

In an embodiment, the sentence "in response to sending the first preamble on the first candidate cell, determine that a random access process corresponding to the first preamble is successfully completed" means that once the first node sends the first preamble on the first candidate cell, the random access process corresponding to the first preamble is considered to be successfully completed.

In an embodiment, the sentence "in response to sending the first preamble on the first candidate cell, determine that a random access process corresponding to the first preamble is successfully completed" means that along with the first node sending the first preamble on the first candidate cell one or more times, when a quantity of times of sending the first preamble reaches the quantity of repetitions for sending the first preamble configured by the first subfield, sending of the first preamble is stopped, and the random access process corresponding to the first preamble is considered to be successfully completed.

In an embodiment, the first preamble triggers the first signaling.

In an embodiment, in response to the first preamble being sent, the first signaling is received.

In an embodiment, the first signaling depends on sending of the first preamble.

In an embodiment, the first DCI is format 1_0 DCI.

In an embodiment, the second signaling is the first DCI.

In an embodiment, the first DCI is the second signaling.

In an embodiment, the first DCI schedules transmission of the first preamble.

In an embodiment, in response to receiving the first DCI, the first preamble is sent.

In an embodiment, transmission of the first preamble depends on receiving of the first DCI.

In an embodiment, the first DCI indicates, from the random access configuration information of the first candidate cell configured by the first RRC message, a physical layer parameter sent by the first preamble.

In an embodiment, the first DCI indicates the index of the first preamble.

In an embodiment, the first DCI indicates the sending cell of the first preamble.

In an embodiment, the DCI indicates that the first candidate cell is the sending cell of the first preamble.

### Embodiment 6

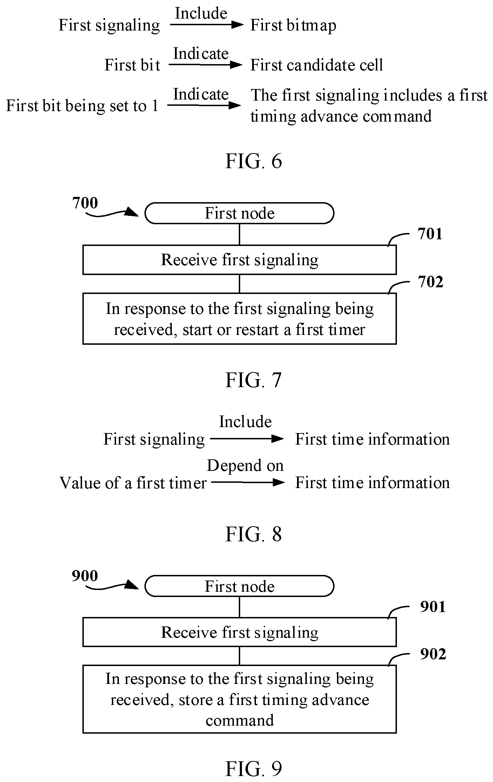

Embodiment 6 illustrates a schematic diagram of a first bitmap included in first signaling according to an embodiment of this application, as shown in FIG. 6.

In Embodiment 6, the first signaling includes a first bitmap, the first bit in the first bitmap indicates a first candidate cell, and the first bit being set to 1 indicates that the first signaling includes a first timing advance command.

In an embodiment, a second bit in the first bitmap indicates a second candidate cell, and the second bit being set to 0 indicates that the first signaling does not include a timing advance command of the candidate cell indicated by the second bit.

In an embodiment, a third bit in the first bitmap is reserved.

In an embodiment, any bit in the first bitmap is not reserved.

In an embodiment, each bit in an octet to which the first timing advance command belongs, other than the first timing advance command, is reserved.

In an embodiment, at least one bit in the octet to which the first timing advance command belongs, other than the first timing advance command, is reserved.

In an embodiment, the octet to which the first timing advance command belongs includes a fourth bit, and the fourth bit indicates a TAG ID corresponding to the first timing advance command.

In a sub-embodiment of the foregoing embodiment, only when the first candidate cell is configured with a plurality of TAG IDs, the fourth bit of the octet to which the first timing advance command belongs indicates the TAG ID corresponding to the first timing advance command.

In a sub-embodiment of the foregoing embodiment, if the first candidate cell is configured with only one TAG ID, the fourth bit of the octet to which the first timing advance command belongs is reserved.

In an embodiment, a value of the reserved bit is 0.

In an embodiment, a quantity of valid bits in the first bitmap depends on a quantity of candidate cells configured for a first serving cell.

In an embodiment, the quantity of valid bits in the first bitmap is equal to the quantity of candidate cells configured for the first serving cell.

In an embodiment, the quantity of valid bits in the first bitmap does not exceed the quantity of candidate cells configured for the first serving cell.

In an embodiment, the quantity of valid bits in the first bitmap depends on a quantity of candidate cells configured for the first serving cell and supporting advanced uplink synchronization.

In an embodiment, the quantity of valid bits in the first bitmap is equal to the quantity of candidate cells configured for the first serving cell and supporting advanced uplink synchronization.

In an embodiment, the quantity of valid bits in the first bitmap does not exceed the quantity of candidate cells configured for the first serving cell and supporting advanced uplink synchronization.

In an embodiment, the quantity of valid bits in the first bitmap depends on a quantity of candidate cells configured for the first serving cell and supporting advanced uplink synchronization and configured with an execution condition.

In an embodiment, the quantity of valid bits in the first bitmap is equal to the quantity of candidate cells configured for the first serving cell and supporting advanced uplink synchronization and configured with the execution condition.

In an embodiment, the quantity of valid bits in the first bitmap does not exceed the quantity of candidate cells configured for the first serving cell and supporting advanced uplink synchronization and configured with the execution condition.

In an embodiment, the valid bits in the first bitmap refer to unreserved bits in the first bitmap.

In an embodiment, a reserved bit in the first bitmap refers to a bit in the first bitmap that does not indicate any candidate cell.

In an embodiment, the valid bits in the first bitmap refer to all bits in the first bitmap.

In an embodiment, the valid bits in the first bitmap refer to part of bits in the first bitmap.

In an embodiment, the valid bits in the first bitmap are consecutive bits in the first bitmap.

In an embodiment, the valid bits in the first bitmap are located in first N consecutive bits in the first bitmap.

In an embodiment, N is a non-negative integer.

In an embodiment, N is the quantity of valid bits in the first bitmap.

In an embodiment, an order of candidate cells indicated by the valid bits in the first bitmap depends on a first RRC message.

In an embodiment, the order of candidate cells indicated by the valid bits in the first bitmap depends on an order of candidate cells in first RRC message configuration.

In an embodiment, the order of candidate cells indicated by the valid bits in the first bitmap depends on an order of candidate cells in a CondReconfigToAddModList field and a CondReconfigToRemoveList field in the first RRC message configuration.

In an embodiment, the order of candidate cells indicated by the valid bits in the first bitmap depends on a first UE variable.

In an embodiment, the order of candidate cells indicated by the valid bits in the first bitmap depends on an order of candidate cells stored in the first UE variable.

In an embodiment, the order of candidate cells indicated by the valid bits in the first bitmap depends on an order of elements in an ltm-CandidateList field in the first UE variable.

In an embodiment, the order of candidate cells indicated by the valid bits in the first bitmap is the order of candidate cells in the first RRC message configuration.

In an embodiment, the order of candidate cells indicated by the valid bits in the first bitmap is the order of candidate cells stored in the first UE variable.

In an embodiment, the order of candidate cells indicated by the valid bits in the first bitmap is the order of the elements in the ltm-CandidateList field in the first UE variable.

In an embodiment, the value of the reserved bit is equal to a value of a bit in the valid bits that indicates that the first signaling does not include a timing advance command of a candidate cell indicated by the bit.

In an embodiment, the first signaling includes M timing advance commands.

In an embodiment, M is a quantity of bits with a value of 1 in the first bitmap.

In an embodiment, M is a quantity of bits with a value of 1 in the valid bits of the first bitmap.

In an embodiment, M is a quantity of bits, in the first bitmap, that indicate that the first signaling includes the timing advance command of the candidate cell indicated by the bits.

In an embodiment, the M timing advance commands in the first signaling correspond to bits in the first bitmap.

In an embodiment, the M timing advance commands in the first signaling correspond to the valid bits in the first bitmap.

In an embodiment, the M timing advance commands in the first signaling correspond to bits with a value of 1 in the valid bits of the first bitmap.

In an embodiment, the M timing advance commands in the first signaling correspond sequentially to bits with a value of 1 in the valid bits of the first bitmap from low to high.

In an embodiment, the M timing advance commands in the first signaling correspond sequentially to bits with a value of 1 in the valid bits of the first bitmap from high to low.

In an embodiment, the first bit in the first bitmap is a valid bit.

In an embodiment, the second bit in the first bitmap is a valid bit.

In an embodiment, the third bit in the first bitmap is not a valid bit.

### Embodiment 7

Embodiment 7 illustrates a schematic diagram of starting or restarting a first timer according to an embodiment of this application, as shown in FIG. 7.

In Embodiment 7, a first node in this application, in step 701, receives first signaling; and in step 702, in response to the first signaling being received, starts or restarts a first timer, where the first timer is for uplink time alignment of a first candidate cell.

In an embodiment, a value of the first counter is default.

In an embodiment, the value of the first counter is configurable.

In an embodiment, the value of the first counter is predefined.

In an embodiment, the first timer is a timeAlignmentTimer.

In an embodiment, a first RRC message includes the value of the first timer.

In an embodiment, a field in the first RRC message indicates the value of the first timer.

In an embodiment, when the first timer is at expiry, it is considered that there is uplink out-of-synchronization on the first candidate cell, in other words, TA of the first candidate cell is invalid.

In an embodiment, that TA of the first candidate cell is invalid refers to that there is no valid TA on the first candidate cell.

In an embodiment, the first signaling indicates one or more timing advance commands, and in response to the first signaling being received, one or more timers are started or restarted, where a quantity of the one or more timers is equal to a quantity of the one or more timing advance commands.

In a sub-embodiment of the foregoing embodiment, the one or more timing advances and timers are for uplink time alignment of one or more candidate cells.

In a sub-embodiment of the foregoing embodiment, the first RRC message indicates values of timers of respective candidate cells.

In a sub-embodiment of the foregoing embodiment, the first RRC message indicates values of timers of respective candidate cells that support early uplink synchronization.

In a sub-embodiment of the foregoing embodiment, the first RRC message indicates values of timers of respective candidate cells that support early uplink synchronization and are configured with execution conditions.

In a sub-embodiment of the foregoing embodiment, the first signaling indicates values of the one or more timers.

In an embodiment, the first signaling indicates the one or more timing advance commands, and in response to the first signaling being received, a timer is started or restarted, where the timer is the first timer.

In a sub-embodiment of the foregoing embodiment, the first timer is for uplink time alignment of the one or more candidate cells.

In a sub-embodiment of the foregoing embodiment, the one or more candidate cells are candidate cells for which timing advance commands are indicated in the first signaling.

In a sub-embodiment of the foregoing embodiment, the first candidate cell is one candidate cell of the one or more candidate cells.

In a sub-embodiment of the foregoing embodiment, maintenance of timing advance of the one or more candidate cells shares the first timer.

In a sub-embodiment of the foregoing embodiment, the first RRC message indicates the value of the first timer.

In a sub-embodiment of the foregoing embodiment, the first signaling indicates the value of the first timer.

In a sub-embodiment of the foregoing embodiment, when the first timer is at expiry, TA of all candidate cells in the one or more candidate cells is considered invalid.

In a sub-embodiment of the foregoing embodiment, when the first timer is at expiry, all candidate cells in the one or more candidate cells are considered uplink out-of-synchronization.

In a sub-embodiment of the foregoing embodiment, when the first condition is not satisfied, in response to the first timer being at expiry, third signaling is sent to a maintenance base station of the first serving cell.

In a sub-embodiment of the foregoing embodiment, the third signaling indicates that the first node has not yet performed a handover.

In an embodiment, that an uplink timing of the target signaling depending on the first timing advance command includes: when the first timer is not running, the uplink timing of the target signaling does not depend on the first timing advance command.

In a sub-embodiment of the foregoing embodiment, not running refers to at expiry (at expiry).

In a sub-embodiment of the foregoing embodiment, not running refers to stopping (stop).

In an embodiment, that an uplink timing of the target signaling depending on a first timing advance command includes: when the first node does not store the first timing advance command, the uplink timing of the target signaling does not depend on the first timing advance command.

In an embodiment, that the uplink timing of the target signaling depending on the first timing advance command includes: only when the first timer is running, the uplink timing of the target signaling depends on the first timing advance command.

In an embodiment, that the uplink timing of the target signaling depending on the first timing advance command includes: when at least the first timer is running, the uplink timing of the target signaling depends on the first timing advance command.

### Embodiment 8

Embodiment 8 illustrates a schematic diagram of relations between first time information and both of first signaling and a first timer according to an embodiment of this application, as shown in FIG. 8.

In Embodiment 8, the first signaling includes the first time information, and a value of the first timer depends on the first time information.

In an embodiment, the first timer is set to a first time length, and the first time length depends on the first time information.

In an embodiment, the first time length is the first time information.

In an embodiment, the first time information is the value of the first timer.

In an embodiment, the first time length is maximum running time of the first timer.

In an embodiment, the first time length is determined based on the first time information.

In an embodiment, the first time information indicates expiry time of the first timer.

In an embodiment, the first time information is an index.

In an embodiment, the first time information is an index of a time length.

In an embodiment, the first time information is an index of a time interval.

In an embodiment, the first time information is an index of expiry time.

In an embodiment, the time length is predefined, and the first time information indicates the time length.

In an embodiment, the time interval is predefined, and the first time information indicates the time interval.

In an embodiment, the expiry time is predefined, and the first time information indicates the expiry time.

In an embodiment, the first time information and the first timing advance command belong to two consecutive octets.

In an embodiment, there is no bit between the first time information and the first timing advance command.

In an embodiment, there is at least one bit between the first time information and the first timing advance command.

In an embodiment, a length of the first timer has a default value.

In an embodiment, the length of the first timer is configurable.

In an embodiment, the length of the first timer is configured by a first RRC message.

In an embodiment, the length of the first timer is configured by the first signaling.

In an embodiment, the length of the first timer is configured by the first time information.

In an embodiment, that the length of the first timer depends on the first time information includes: the length of the first timer depends on a value of the first time information.

In an embodiment, that the length of the first timer depends on the first time information includes: the length of the first timer depends on the value indicated by the first time information and a time length between a receiving moment of the first signaling and a sending moment of a first preamble.

In an embodiment, that the length of the first timer depends on the first time information includes: the length of the first timer is equal to the value indicated by the first time information minus the time length between the receiving moment of the first signaling and the sending moment of the first preamble.

### Embodiment 9

Embodiment 9 illustrates a schematic diagram of storing a first timing advance command according to an embodiment of this application, as shown in FIG. 9.

In Embodiment 9, a first node in this application, in step 901, receives first signaling; and in step 902, in response to the first signaling being received, stores the first timing advance command.

In an embodiment, storing the first timing advance command refers to: storing a TA value indicated by the first timing advance command as TA of a first candidate cell.

In an embodiment, storing the first timing advance command refers to: updating the TA of the first candidate cell stored by the first node using the TA value indicated by the first timing advance command.

In an embodiment, storing the first timing advance command refers to: storing the first timing advance command in a first UE variable.

In an embodiment, the first UE variable is at an RRC sublayer.

In an embodiment, the first UE variable is at a MAC sublayer.

In an embodiment, the first UE variable is a variable.

In an embodiment, the first UE variable is a buffer.

In an embodiment, the first UE variable is a memory.

In an embodiment, the first UE variable includes a first condition and first configuration information for the first candidate cell.

In an embodiment, the first UE variable is VarLTM-Config.

In an embodiment, the first UE variable is ltm-ReferenceConfiguration.

In an embodiment, the first UE variable is ltm-CandidateList.

In an embodiment, the first UE variable is VarCLTM-Config.

In an embodiment, the first UE variable is VarCondLTM-Config.

In an embodiment, the first UE variable is VarCondLTM-candidateTA.

In an embodiment, the first timing advance command is stored in a subfield of the first UE variable.

In an embodiment, the first timing advance command is stored in an LTM-Candidate-r18 field of the first UE variable.

In an embodiment, in response to the first signaling being received, time when the first signaling is received is stored.

In an embodiment, in response to the first timing advance command being received, time when the first timing advance command is received is stored.

In an embodiment, in response to the first timing advance command being received, the time when the first signaling is received is stored.

In an embodiment, in response to the first signaling being received, the time when the first timing advance command is received is stored.

In an embodiment, in response to the first signaling being received, a first timer is started or restarted.

In an embodiment, in response to the first signaling being received, timeAlignmentTimer for uplink time alignment of the first candidate cell is not started or restarted.

In an embodiment, in response to the first timing advance command being stored, the first timer is started or restarted.

In an embodiment, in response to the first timer being at expiry, the stored first timing advance command is discarded.

In an embodiment, in response to the first timer being at expiry, the first timer is stopped.

In an embodiment, that an uplink timing of target signaling depends on the first timing advance command includes: when a second condition is satisfied, the uplink timing of the target signaling depends on the first timing advance command.

In a sub-embodiment of the foregoing embodiment, the second condition is that the first timer is running.

In a sub-embodiment of the foregoing embodiment, the second condition is that sending time of the target signaling belongs to a first time interval.

In an attached embodiment of the foregoing sub-embodiment, start time of the first time interval is the stored time when the first signaling is received.

In an attached embodiment of the foregoing sub-embodiment, the start time of the first time interval is the stored time when the first timing advance command is received.

In an attached embodiment of the foregoing sub-embodiment, a length of the first time interval is predefined.

In an attached embodiment of the foregoing sub-embodiment, the length of the first time interval is configurable.

In an attached embodiment of the foregoing sub-embodiment, the length of the first time interval is configured by the first signaling.

In an attached embodiment of the foregoing sub-embodiment, the length of the first time interval is configured by a first RRC message.

### Embodiment 10

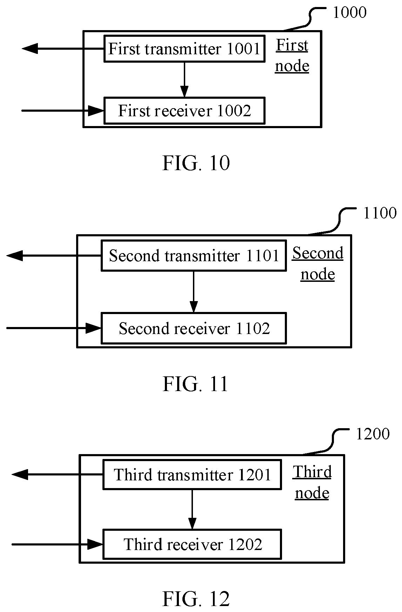

Embodiment 10 illustrates a block diagram of a structure of a processing apparatus used for a first node according to an embodiment of this application; as shown in FIG. 10. In FIG. 10, a first processing machine 1000 in the first node includes a first transmitter 1001 and a first receiver 1002.

The first receiver 1002 receives a first RRC message, where the first RRC message includes a first condition and first configuration information for a first candidate cell, the first configuration information includes physical layer configuration of the first candidate cell, the first candidate cell is configured for a first serving cell; receives first signaling, where the first signaling indicates the first candidate cell, and the first signaling indicates a first timing advance command.

The first processing machine 1000, after the first signaling is received, applies the first configuration information and sends target signaling in response to the first condition being satisfied.

In Embodiment 10, the first signaling is signaling of a protocol layer below the RRC sublayer; when the first signaling is received, no random access process is ongoing; an uplink timing of the target signaling depends on the first timing advance command; and the first condition depends on measurement.

In an embodiment, the first transmitter 1001 sends a first preamble on the first candidate cell before the first signaling is received; and the first processing machine 1000, in response to sending the first preamble on the first candidate cell, determines that a random access process corresponding to the first preamble is successfully completed. The first RRC message includes random access configuration information for the first candidate cell, and the random access configuration information includes at least one of an uplink carrier, an SSB, or a PRACH mask that is associated with the first preamble.

In an embodiment, the first receiver 1002 receives first DCI, where the DCI indicates an index of the first preamble; and the first DCI triggers the first preamble.

In an embodiment, the first signaling includes a first bitmap, a first bit in the first bitmap indicates the first candidate cell, and the first bit being set to 1 indicates that the first signaling includes the first timing advance command.

In an embodiment, the first processing machine 1000, in response to the first signaling being received, starts or restarts a first timer; and the first timer is used for uplink time alignment of the first candidate cell.

In an embodiment, the first signaling includes first time information, and a value of the first timer depends on the first time information.

In an embodiment, the first processing machine 1000, in response to the first signaling being received, stores the first timing advance command.

In an embodiment, the first receiver 1002 includes at least one of the antenna 452, the receiver 454, the multiple-antenna receive processor 458, the receive processor 456, the controller/processor 459, the memory 460, or the data source 467 in FIG. 4 of this application.

In an embodiment, the first receiver 1002 includes at least the antenna 452 and the receiver 454 in FIG. 4 of this application.

In an embodiment, the first transmitter 1001 includes at least one of the antenna 452, the transmitter 454, the multiple-antenna transmit processor 457, the transmit processor 468, the controller/processor 459, the memory 460, or the data source 467 in FIG. 4 of this application.

In an embodiment, the first transmitter 1001 includes at least the antenna 452 and the transmitter 454 in FIG. 4 of this application.

### Embodiment 11

Embodiment 11 illustrates a block diagram of a structure of a processing apparatus used for a second node according to an embodiment of this application; as shown in FIG. 11. In FIG. 11, the processing apparatus 1100 in the second node includes a second transmitter 1101 and a second receiver 1102.

The second transmitter 1101 sends a first RRC message, where the first RRC message includes a first condition and first configuration information for a first candidate cell, the first configuration information includes physical layer configuration of the first candidate cell, and the first candidate cell is configured for a first serving cell; and sends first signaling, where the first signaling indicates the first candidate cell, and the first signaling indicates a first timing advance command.

In Embodiment 11, after the first signaling is received, in response to the first condition being satisfied, a recipient of the first signaling applies the first configuration information and sends target signaling; an uplink timing of the target signaling depends on the first timing advance command; the first signaling is signaling of a protocol layer below an RRC sublayer; when the first signaling is received, no random access process is ongoing; and the first condition depends on measurement.

In an embodiment, the second transmitter 1101 sends first DCI, where the DCI indicates an index of a first preamble; and the first DCI triggers the first preamble.

In an embodiment, the first signaling includes a first bitmap, a first bit in the first bitmap indicates the first candidate cell, and the first bit being set to 1 indicates that the first signaling includes the first timing advance command.

In an embodiment, the recipient of the first signaling, in response to the first signaling being received, starts or restarts a first timer; and the first timer is used for uplink time alignment of the first candidate cell.

In an embodiment, the first signaling includes first time information, and a value of the first timer depends on the first time information.

In an embodiment, the recipient of the first signaling, in response to the first signaling being received, stores the first timing advance command.

In an embodiment, the second transmitter 1101 includes at least one of the antenna 420, the transmitter 418, the multi-antenna transmit processor 471, the transmit processor 416, the controller/processor 475, or the memory 476 in FIG. 4 of this application.

In an embodiment, the second transmitter 1101 includes at least the antenna 420 and the transmitter 418 in FIG. 4 of this application.

In an embodiment, the second receiver 1102 includes at least one of the antenna 420, the receiver 418, the multi-antenna receive processor 472, the receive processor 470, the controller/processor 475, or the memory 476 in FIG. 4 of this application.

In an embodiment, the second receiver 1102 includes at least the antenna 420 and the receiver 418 in FIG. 4 of this application.

### Embodiment 12

Embodiment 12 illustrates a block diagram of a structure of a processing apparatus used for a third node according to an embodiment of this application, as shown in FIG. 12. In FIG. 12, the processing apparatus 1200 in the third node includes a third transmitter 1201 and a third receiver 1202.

The third processing machine 1200, a third processing machine receives a first preamble on a first candidate cell; in response to receiving the first preamble, sends a second message to a second node, where the second message triggers first signaling, the first signaling indicates the first candidate cell, and the first signaling indicates a first timing advance command; and receives target signaling.

In Embodiment 12, a first RRC message includes a first condition and first configuration information for the first candidate cell, the first configuration information includes physical layer configuration of the first candidate cell, and the first candidate cell is configured for a first serving cell; the first RRC message includes random access configuration information for the first candidate cell, and the random access configuration information includes at least one of an uplink carrier, an SSB, or a PRACH mask that is associated with the first preamble; the first signaling is signaling of a protocol layer below an RRC sublayer; when the first signaling is received, no random access process is ongoing; an uplink timing of the target signaling depends on the first timing advance command; after the first signaling is received, in response to the first condition being satisfied, a recipient of the first signaling applies the first configuration information and sends the target signaling; the recipient of the first signaling is a recipient of the first RRC message; and the uplink timing of the target signaling depends on the first timing advance command.

In an embodiment, the third transmitter 1201 includes at least one of the antenna 420, the transmitter 418, the multi-antenna transmit processor 471, the transmit processor 416, the controller/processor 475, or the memory 476 in FIG. 4 of this application.

In an embodiment, the third transmitter 1201 includes at least the antenna 420 and the transmitter 418 in FIG. 4 of this application.

In an embodiment, the third receiver 1202 includes at least one of the antenna 420, the receiver 418, the multi-antenna receive processor 472, the receive processor 470, the controller/processor 475, or the memory 476 in FIG. 4 of this application.

In an embodiment, the third receiver 1202 includes at least the antenna 420 and the receiver 418 in FIG. 4 of this application.

### Embodiment 13

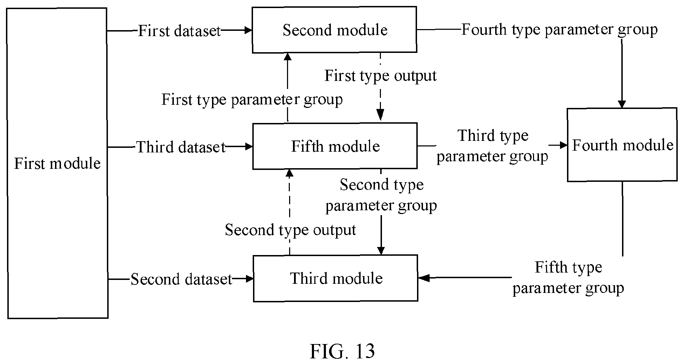

Embodiment 13 illustrates a schematic diagram of an artificial intelligence processing system according to an embodiment of this application, as shown in FIG. 13. FIG. 13 includes a first module, a second module, a third module, a fourth module, and a fifth module.

In Embodiment 13, the first module sends a first dataset to the second module, the first module sends a second dataset to the third module, the first module sends a third dataset to the fifth module, the fifth module sends a first type parameter group to the second module, the fifth module sends a second type parameter group to the third module, the fifth module sends a third type parameter group to the fourth module, the second module sends a fourth type parameter group to the fourth module, and the fourth module sends a fifth type parameter group to the third module.

In an embodiment, the first module, the second module, the third module, the fourth module, and the fifth module all belong to a first node.

The foregoing method avoids air interface signaling interaction and shortens a transmission delay.

In an embodiment, any one of the first module, the second module, the third module, the fourth module, and the fifth module does not belong to the first node.

The foregoing method reduces hardware complexity of the first node.

In an embodiment, at least the first module in the first module, the second module, the third module, the fourth module, and the fifth module belongs to the first node; and at least one module in the first module, the second module, the third module, the fourth module, and the fifth module does not belong to the first node.

The foregoing method balances the hardware complexity and the transmission delay of the first node.

In an embodiment, the first module is used for data collection (Data Collection).

In an embodiment, the first module is responsible for data collection.

In an embodiment, the first module has a data collection function.

In an embodiment, the second module is used for model training (Model Training).

In an embodiment, the second module is responsible for model training.

In an embodiment, the second module has a model training function.

In an embodiment, the second module performs AI/ML model training (model training).

In an embodiment, the second module performs validation (validation).

In an embodiment, the second module performs testing (testing).

In an embodiment, the second module generates a model performance metric (model performance metrics).

In an embodiment, the second module is responsible for data preparation (data preparation).

In an embodiment, the data preparation includes at least one of data pre-processing (data pre-processing), cleaning (cleaning), formatting (formatting), or transformation (transformation).

In an embodiment, the third module is used for inference (Inference).

In an embodiment, the third module has an inference function.

In an embodiment, the third module is responsible for inference.

In an embodiment, the fourth module is used for model storage (Model Storage).

In an embodiment, the fourth module has a model storage (Model Storage) function.

In an embodiment, the fourth module is responsible for storing a trained model.

In an embodiment, the fourth module is responsible for storing a trained model that can be used to perform inference processing.

In an embodiment, the fifth module is used for management (Management).

In an embodiment, the fifth module is responsible for management.

In an embodiment, the fifth module has a management function.

In an embodiment, the first dataset is training data (Training Data).

In an embodiment, the second dataset is inference data (Inference Data).

In an embodiment, the third dataset is monitoring data (Monitoring Data).

In an embodiment, the first type parameter group includes a monitoring output (Monitoring output).

In an embodiment, the second type parameter group includes a management instruction (Management Instruction).

In an embodiment, the second type parameter group is used for a fine-tune operation of the inference function.

In an embodiment, the second type parameter group includes an identifier of a model.

In an embodiment, the second type parameter group is used for model selection.

In an embodiment, the second type parameter group is used for model switching.

In an embodiment, the second type parameter group is used for model activating/deactivating.

In an embodiment, the second type parameter group is used for falling back from an AI-ML operation to a non-AI-ML operation.

In an embodiment, the third type parameter group includes a model conversion request (Model Transfer Request).

In an embodiment, the third type parameter group includes a model delivery request (Model Delivery Request).

In an embodiment, the fourth type parameter group includes a trained model (Trained Model).

In an embodiment, the fourth type parameter group includes an updated model (Updated Model).

In an embodiment, the fourth type parameter group indicates an identifier of a model.

In an embodiment, the fifth type parameter group includes a model conversion (Model Transfer).

In an embodiment, the fifth type parameter group includes a model delivery (Model Delivery).

In an embodiment, the fifth type parameter group indicates an identifier of a model.

In an embodiment, a first type output includes a monitoring output (monitoring output).

In an embodiment, the first type output exists.

In an embodiment, the first type output does not exist.

In an embodiment, a second type output includes an inference output (Inference Output).

In an embodiment, the second type output is used by the fifth module to monitor performance of an AI/ML model.

In an embodiment, the second type output is used by the fifth module to monitor performance of an AI/ML function.

In an embodiment, the second type output exists.

In an embodiment, the second type output does not exist.

In an embodiment, the artificial intelligence processing system generates or assists in generating at least one of determining of whether a first condition is satisfied, determining of a length of a first timer, or determining of validity of TA for uplink time alignment of a first candidate cell.

In an embodiment, the fifth module generates or assists in generating at least one of determining of whether the first condition is satisfied, determining of the length of the first timer, or determining of the validity of the TA for uplink time alignment of the first candidate cell.

In an embodiment, the third module generates or assists in generating at least one of determining of whether the first condition is satisfied, determining of the length of the first timer, or determining of the validity of the TA for uplink time alignment of the first candidate cell.

In an embodiment, the second type output includes at least one of determining of whether the first condition is satisfied, determining of the length of the first timer, or determining of the validity of the TA for uplink time alignment of the first candidate cell.

In an embodiment, at least one of the first dataset or the second dataset includes a first RRC message.

In an embodiment, at least one of the first dataset or the second dataset includes first configuration information.

In an embodiment, at least one of the first dataset or the second dataset includes the first condition.

In an embodiment, at least one of the first dataset or the second dataset includes first candidate cell configuration.

In an embodiment, at least one of the first dataset or the second dataset includes measurement.

In an embodiment, at least one of the first dataset or the second dataset includes first signaling.

In an embodiment, at least one of the first dataset or the second dataset includes first time information.

In an embodiment, at least one of the first dataset, the second dataset, or the third dataset includes the first RRC message.

In an embodiment, at least one of the first dataset, the second dataset, or the third dataset includes the first configuration information.

In an embodiment, at least one of the first dataset, the second dataset, or the third dataset includes the first condition.

In an embodiment, at least one of the first dataset, the second dataset, or the third dataset includes the first candidate cell configuration.

In an embodiment, at least one of the first dataset, the second dataset, or the third dataset includes the measurement.

In an embodiment, at least one of the first dataset, the second dataset, or the third dataset includes the first signaling.

In an embodiment, at least one of the first dataset, the second dataset, or the third dataset includes the first time information.

In an embodiment, Embodiment 13 is merely intended to describe that this application can be used for the artificial intelligence processing system, this embodiment does not limit applying this application to a non-artificial intelligence processing system, and this embodiment does not limit applying this application to another type of artificial intelligence processing system to achieve effects comparable to the artificial intelligence processing system shown in FIG. 13.

A person of ordinary skill in the art may understand that all or part of the steps of the foregoing methods may be implemented by a program instructing relevant hardware. The program may be stored in a computer-readable storage medium, such as a read-only memory, a hard disk, or an optical disk. Optionally, all or part of the steps of the foregoing embodiments may also be implemented using one or more integrated circuits. Correspondingly, each module unit in the foregoing embodiments may be implemented in a form of hardware, or may be implemented in a form of a software functional module. This application is not limited to any specific combination of software and hardware. The user equipment, the terminal, and the UE in this application include, but are not limited to, drones, communication modules on drones, remote control aircrafts, flying machines, small aircrafts, mobile phones, tablet computers, notebook computers, vehicle-mounted communication devices, wireless sensors, network cards, internet of things terminals, RFID terminals, NB-IOT terminals, MTC (Machine Type Communication, machine type communication) terminals, eMTC (enhanced MTC, enhanced MTC) terminals, data cards, network cards, vehicle-mounted communication devices, low-cost mobile phones, low-cost tablet computers, and other wireless communication devices. The base station or system device in this application includes, but is not limited to, a macro cellular base station, a micro cellular base station, a home base station, a relay base station, a gNB (NR NodeB) NR NodeB, TRP (Transmitter Receiver Point, transmission reception point), and another wireless communication device.

The foregoing descriptions are merely preferred embodiments of this application, but are not intended to limit the protection scope of this application. Any modification, equivalent replacement, improvement, and the like made within the spirit and principles of this application shall all fall within the protection scope of this application.

## Claims

1. A first node used for wireless communication, comprising:
a first receiver, configured to: receive a first RRC message, wherein the first RRC message comprises a first condition and first configuration information for a first candidate cell, the first configuration information comprises physical layer configuration of the first candidate cell, and the first candidate cell is configured for a first serving cell; and receive first signaling, wherein the first signaling indicates the first candidate cell, and the first signaling indicates a first timing advance command; and
a first processing machine, configured to: after the first signaling is received, apply the first configuration information and send target signaling in response to the first condition being satisfied, wherein
the first signaling is signaling of a protocol layer below an RRC sublayer; when the first signaling is received, no random access process is ongoing; an uplink timing of the target signaling depends on the first timing advance command; and the first condition depends on measurement.

2. The first node according to claim 1, comprising:
a first transmitter, configured to send a first preamble on the first candidate cell before the first signaling is received, wherein
the first processing machine determines, in response to sending the first preamble on the first candidate cell, that a random access process corresponding to the first preamble is successfully completed; and
the first RRC message comprises random access configuration information for the first candidate cell, and the random access configuration information comprises at least one of an uplink carrier, an SSB, or a PRACH mask that is associated with the first preamble.

3. The first node according to claim 2, wherein
the first receiver, is configured to receive first DCI, wherein the DCI indicates an index of the first preamble; and
the first DCI triggers the first preamble.

4. The first node according to any one of claims 1 to 3, wherein the first signaling comprises a first bitmap, a first bit in the first bitmap indicates the first candidate cell, and the first bit being set to 1 indicates that the first signaling comprises the first timing advance command.

5. The first node according to any one of claims 1 to 4, wherein
the first processing machine, is configured to start or restart a first timer in response to the first signaling being received, wherein
the first timer is used for uplink time alignment of the first candidate cell.

6. The first node according to claim 5, wherein the first signaling comprises first time information, and a value of the first timer depends on the first time information.

7. The first node according to any one of claims 1 to 6, wherein:
the first processing machine, is configured to store the first timing advance command in response to the first signaling being received.

8. A second node used for wireless communication, comprising:
a second processing machine, configured to: send a first RRC message, wherein the first RRC message comprises a first condition and first configuration information for a first candidate cell, the first configuration information comprises physical layer configuration of the first candidate cell, and the first candidate cell is configured for a first serving cell; and send first signaling, wherein the first signaling indicates the first candidate cell, and the first signaling indicates a first timing advance command, wherein
after the first signaling is received, in response to the first condition being satisfied, a recipient of the first signaling applies the first configuration information and sends target signaling; an uplink timing of the target signaling depends on the first timing advance command; the first signaling is signaling of a protocol layer below an RRC sublayer; when the first signaling is received, no random access process is ongoing; and the first condition depends on measurement.

9. A third node used for wireless communication, comprising:
a third processing machine, configured to: receive a first preamble on a first candidate cell; in response to receiving the first preamble, send a second message to a second node, wherein the second message triggers first signaling, the first signaling indicates the first candidate cell, and the first signaling indicates a first timing advance command; and receive target signaling, wherein
a first RRC message comprises a first condition and first configuration information for the first candidate cell, the first configuration information comprises physical layer configuration of the first candidate cell, and the first candidate cell is configured for a first serving cell; the first RRC message comprises random access configuration information for the first candidate cell, and the random access configuration information comprises at least one of an uplink carrier, an SSB, or a PRACH mask that is associated with the first preamble; the first signaling is signaling of a protocol layer below an RRC sublayer; when the first signaling is received, no random access process is ongoing; an uplink timing of the target signaling depends on the first timing advance command; after the first signaling is received, in response to the first condition being satisfied, a recipient of the first signaling applies the first configuration information and sends the target signaling; the recipient of the first signaling is a recipient of the first RRC message; and the uplink timing of the target signaling depends on the first timing advance command.

10. A method in a first node used for wireless communication, comprising:
receiving a first RRC message, wherein the first RRC message comprises a first condition and first configuration information for a first candidate cell, the first configuration information comprises physical layer configuration of the first candidate cell, and the first candidate cell is configured for a first serving cell; receiving first signaling, wherein the first signaling indicates the first candidate cell, and the first signaling indicates a first timing advance command; and after the first signaling is received, in response to the first condition being satisfied, applying the first configuration information and sending target signaling, wherein
the first signaling is signaling of a protocol layer below an RRC sublayer; when the first signaling is received, no random access process is ongoing; an uplink timing of the target signaling depends on the first timing advance command; and the first condition depends on measurement.

11. A method in a second node used for wireless communication, comprising:
sending a first RRC message, wherein the first RRC message comprises a first condition and first configuration information for a first candidate cell, the first configuration information comprises physical layer configuration of the first candidate cell, and the first candidate cell is configured for a first serving cell; and sending first signaling, wherein the first signaling indicates the first candidate cell, and the first signaling indicates a first timing advance command, wherein
after the first signaling is received, in response to the first condition being satisfied, a recipient of the first signaling applies the first configuration information and sends target signaling; an uplink timing of the target signaling depends on the first timing advance command; the first signaling is signaling of a protocol layer below an RRC sublayer; when the first signaling is received, no random access process is ongoing; and the first condition depends on measurement.

12. A method in a third node used for wireless communication, comprising:
receiving a first preamble on a first candidate cell; in response to receiving the first preamble, sending a second message to a second node, wherein the second message triggers first signaling, the first signaling indicates the first candidate cell, and the first signaling indicates a first timing advance command; and receiving target signaling, wherein
a first RRC message comprises a first condition and first configuration information for the first candidate cell, the first configuration information comprises physical layer configuration of the first candidate cell, and the first candidate cell is configured for a first serving cell; the first RRC message comprises random access configuration information for the first candidate cell, and the random access configuration information comprises at least one of an uplink carrier, an SSB, or a PRACH mask that is associated with the first preamble; the first signaling is signaling of a protocol layer below an RRC sublayer; when the first signaling is received, no random access process is ongoing; an uplink timing of the target signaling depends on the first timing advance command; after the first signaling is received, in response to the first condition being satisfied, a recipient of the first signaling applies the first configuration information and sends the target signaling; the recipient of the first signaling is a recipient of the first RRC message; and the uplink timing of the target signaling depends on the first timing advance command.
